# EUROPEAN PATENT APPLICATION

(11) **EP 4 019 597 A1**
(43) Date of publication of application: **29.06.2022**
(21) Application number: 21217729.9
(22) Date of filing: 24.12.2021
(51) Int. Cl.: C09D 11/322, C09D 11/326, C09D 11/36, C09D 11/40

(54) **INK JET INK COMPOSITION, INK SET, AND RECORDING METHOD**

(30) Priority: 28.12.2020 JP 2020218879; 16.03.2021 JP 2021042109
(71) Applicant: Seiko Epson Corporation, Tokyo 160-8801 (JP)
(72) Inventor: KIDA, Hiroaki, Suwa-shi, 392-8502 (JP); ASAI, Shintaro, Suwa-shi, 392-8502 (JP); HIRUMA, Kei, Suwa-shi, 392-8502 (JP); USHIYAMA, Tomoyuki, Suwa-shi, 392-8502 (JP); NAKATANI, Mitsunobu, Suwa-shi, 392-8502 (JP); TSUKADA, Kenta, Suwa-shi, 392-8502 (JP); TERADA, Masaru, Suwa-shi, 392-8502 (JP)
(74) Representative: Miller Sturt Kenyon

(57) **Abstract**

An ink jet ink composition containing a metal pigment, and a liquid medium component, in which the metal pigment is made of a metal particle, the metal particle is surface-modified with a surface treatment agent, the surface treatment agent is at least one selected from the group consisting of a compound represented by formula (1) below and a compound represented by formula (2) below, and the ink jet ink composition is a water-based ink or a solvent-based ink:

(R-O)ₐP(O)(OH)₃₋ₐ ··· (1)

(R)P(O)(OH)₂ ··· (2)

where R is independently a hydrocarbon group having a carbon skeleton having 13 or more carbon atoms, and a is 1 or 2.

## Description

The present application is based on, and claims priority from JP Application Serial Number 2021-042109, filed March 16, 2021 and JP Application Serial Number 2020-218879, filed December 28, 2020, the disclosures of which are hereby incorporated by reference herein in their entirety.

### BACKGROUND

### 1. Technical Field

The present disclosure relates to an ink jet ink composition, an ink set, and a recording method.

### 2. Related Art

In the related art, as a method of manufacturing a decorative product having a glossy appearance, metal plating, foil stamping printing using a metal foil, thermal transfer using a metal foil, and the like have been used.

However, in these methods, it is inconvenient to freely print on a portion to be printed.

On the other hand, a composition containing a pigment or a dye is used as an ink jet ink to be applied to a recording medium by an ink jet method or used as a paint. Such a method is excellent for freely printing on the portion to be printed.

However, when a metal particle is simply applied instead of the pigment or the dye, it may not be possible to sufficiently confer characteristics such as glossiness inherent to the metal.

For the purpose of solving the above problems, use of metal particles surface-treated with a fluorine-based compound (refer to, for example, JP-A-2015-189775) has been proposed.

In addition, an ink jet recording method in which minute ink droplets are ejected from a nozzle of an ink jet head of an ink jet recording apparatus to record an image on a recording medium is known. The development of an ink jet recording method is going, and attempts have been made to form a glossy image by using the ink jet recording method.

For example, JP-A-2013-256665 discloses an ink jet recording method using metallic ink and white ink, and studies have been made to obtain an image with improved aesthetic appearance, such as forming a metallic glossy image.

However, it is still insufficient in terms of ejection stability when an ink composition is ejected from the ink jet head.

In addition, as a method for improving image quality of the metallic glossy image, it is conceivable to form a base layer on a recording medium with a base ink composition and adhere a metallic ink composition to the base layer. As a method for improving the image quality of the metallic glossy image, when trying to improve wet spreading of a metallic ink composition to promote leafing of a metal pigment, although a good metallic gloss can be obtained, there is a problem that the metallic gloss cannot be maintained for a long period of time.

### SUMMARY

The present disclosure can be realized in the following application examples.

A first aspect of the present disclosure is as follows.

According to an application example of the present disclosure, there is provided an ink jet ink composition containing a metal pigment and a liquid medium component, in which the metal pigment is made of a metal particle, the metal particle is surface-modified with a surface treatment agent, the surface treatment agent is at least one selected from the group consisting of a compound represented by formula (1) below and a compound represented by formula (2) below, and the ink jet ink composition is a water-based ink or a solvent-based ink:

(R-O)ₐP(O)(OH)₃₋ₐ ··· (1)

(R)P(O)(OH)₂ ··· (2)

where R is independently a hydrocarbon group having a carbon skeleton having 13 or more carbon atoms, and a is 1 or 2.

According to an application example of the present disclosure, there is provided an ink set including the ink jet ink composition described above and an ink jet ink composition which is a colored ink containing a coloring material.

According to an application example of the present disclosure, there is provided a recording method including ejecting the ink jet ink composition described above from an ink jet head and adhering the ink jet ink composition to a recording medium.

A second aspect of the present disclosure is as follows.

According to an application example of the present disclosure, there is provided an ink set containing a metallic ink composition containing a metal pigment, and a base ink composition, in which a surface tension of the metallic ink composition is lower than a surface tension of the base ink composition, and the metal pigment is a metal particle whose surface is treated.

According to an application example of the present disclosure, there is provided a recording method that uses the ink set described above, and includes adhering the base ink composition to a recording medium, and adhering the metallic ink composition to the adhered base ink composition.

### BRIEF DESCRIPTION OF THE DRAWINGS

FIG. 1 is a schematic view of an example of a recording apparatus.
FIG. 2 is a schematic sectional view illustrating a configuration of an ink jet recording apparatus.

### DESCRIPTION OF EXEMPLARY EMBODIMENTS

A first aspect of the present disclosure will be described.

Hereinafter, preferred embodiments of the present disclosure will be described in detail.

### 1. Metal Pigment Composition

First, a metal pigment composition of the present disclosure will be described.

Incidentally, in the related art, as a method of manufacturing a decorative product having a glossy appearance, metal plating, foil stamping printing using a metal foil, thermal transfer using a metal foil, and the like have been used.

However, these methods have a property that it is difficult to apply these methods to a curved surface portion, for example.

On the other hand, a composition containing a coloring material is used as an ink jet ink to be applied to a recording medium by an ink jet method or used as a paint. Such a method is advantageous in that the method can be suitably applied to a curved surface portion and can be freely adhered to a portion to which ink is to be adhered.

However, when a metal pigment is simply applied as a coloring material, the ejection stability when ejected from the ink jet head is insufficient. In addition, there is a tendency that the characteristics such as glossiness inherent in the metal cannot be fully exhibited.

In the related art, it has been proposed to use metal particles surface-treated with a fluorine-based compound. As a result, although the gloss of the portion to which the composition is adhered is improved to some extent, the ejection stability when ejected from the ink jet head cannot be sufficiently excellent. In addition, the composition is not sufficiently excellent in terms of glossiness and dispersion stability of the composition.

Therefore, the inventors have arrived at the present disclosure as a result of diligent research for the purpose of solving the above problems. That is, an ink jet ink composition of the present disclosure contains a metal pigment and a liquid medium component, in which the metal pigment is made of a metal particle, the metal particle is surface-modified with a surface treatment agent, the surface treatment agent is at least one selected from the group consisting of a compound represented by formula (1) below and a compound represented by formula (2) below, and the ink jet ink composition is a water-based ink or a solvent-based ink:

(R-O)ₐP(O)(OH)₃₋ₐ ··· (1)

(R)P(O)(OH)₂ ··· (2)

where R is independently a hydrocarbon group having a carbon skeleton having 13 or more carbon atoms, and a is 1 or 2.

As a result, the ink jet ink composition has excellent ejection stability and excellent dispersion stability of metal particles and can be suitably applied to manufacturing of a colored body having excellent glossiness. In particular, when applied to any of solvent-based inks and water-based inks, the above-described excellent effects can be obtained. In addition, since it is not necessary to use the above-described fluorine-based surface treatment agent, it is advantageous from the viewpoint of environmental friendliness.

In addition, since it is an ink jet ink composition applied to ejection by the ink jet method, it is possible to enjoy the benefits of applying the ink jet method, such as being able to form fine patterns more suitably and having excellent on-demand properties. In addition, the ejection stability of droplets can be improved in a relatively short period of time after manufacturing of the ink jet composition, and even when the ink jet composition is stored for a long period of time or stored under harsh conditions, the ejection stability of droplets can be improved.

On the other hand, when the above conditions are not satisfied, satisfactory results cannot be obtained.

For example, when the ink composition does not contain the metal pigment surface-modified with the above-described surface treatment agent, the following problems occur. That is, the ejection stability is not excellent. In addition, the dispersion stability of the metal particles is reduced. In addition, the glossiness of the colored body produced by using the ink composition is significantly reduced.

In the following description, the surface treatment agent, which is at least one selected from the group consisting of the compound represented by the above formula (1) and the compound represented by the above formula (2), is also referred to as a "specific surface treatment agent".

Hereinafter, the constituent components of the ink composition of the present disclosure will be described. An ink composition used for recording by being ejected from an ink jet head by an ink jet method and being adhered to a recording medium is referred to as an ink jet ink composition or an ink jet ink. The ink jet ink composition may be simply referred to as an ink composition or an ink.

The ink composition of the present disclosure is an ink containing a metal pigment and is an ink that enables recording of an image having a metallic glossiness due to the metal pigment on the recording medium. The ink composition is also referred to as a metallic ink or a metallic glitter ink. The gloss in the case where an excellent gloss is obtained when the ink composition of the present disclosure is used may be a metallic glossiness.

### 1-1. Metal Pigment

The metal pigment composition of the present disclosure contains a metal pigment made of a metal particle.

The metal particle constituting the metal pigment is surface-modified with a specific surface treatment agent described in detail later. More specifically, it is considered that the OH group on the surface of the metal particle reacts with the phosphorus-containing acid group portion of the specific surface treatment agent, so that the metal particle and the specific surface treatment agent are bonded by a covalent bond or a hydrogen bond.

The metal particles are those in which at least a part of a portion visually visible is made of a metal material, and normally, the vicinity of the outer surface is made of a metal material.

The metal particles are components that have a great influence on the appearance of the colored body produced by using the metal pigment composition.

The metal particles may at least be particles whose region including the vicinity of the surface is made of a metal material, and for example, may be particles entirely made of a metal material, or may be particles having a base made of a non-metal material and a film made of a metal material covering the base. In addition, the metal particles may have an oxide film or the like, such as a passivation film, formed on the surface thereof.

Even with such metal particles, the above-described problems have occurred in the related art, and by applying the present disclosure, the above-described excellent effects can be obtained.

As the metal material constituting the metal particles, elemental metal, various alloys, or the like can be used. Examples of the metal material include aluminum, silver, gold, platinum, nickel, chromium, tin, zinc, indium, titanium, iron, copper and the like. Of these metal materials, the metal particles are preferably those made of aluminum or an aluminum alloy. The reason why aluminum and aluminum alloy are preferable is that aluminum and aluminum alloy have a lower specific gravity than that of iron and the like. As a result, when particles made of aluminum or an aluminum alloy are dispersed in the metal pigment composition, the sedimentation proceeds very slowly, so that the metal pigment composition can be stored for a longer period of time while effectively preventing the occurrence of uneven concentration.

In addition, while suppressing an increase in the production cost of the colored body produced by using the metal pigment composition, the glossiness and the high-class feeling of the colored body can be made particularly excellent. Originally, aluminum and aluminum alloys exhibit a particularly excellent glossiness among various metal materials, and the present inventors have found that the following problems occur when particles made of these materials are applied to the metal pigment composition. That is, the present inventors have found that the storage stability of the metal pigment composition is particularly low, and in particular, when such a metal pigment composition is to be used as an ink jet composition, problems such as a decrease in ejection stability due to an increase in viscosity due to gelation are particularly likely to occur. On the other hand, when the metal pigment is surface-modified with a specific surface treatment agent, even in a case in which particles made of aluminum or an aluminum alloy are used, it is possible to surely prevent the occurrence of the above-described problems. That is, when the metal particles are made of aluminum or an aluminum alloy, the effect of the present disclosure is more prominently exhibited.

The metal particles may have any shape, such as a spherical shape, a spindle shape, and a needle shape, and are preferably a scaly shape.

As a result, on an object to be treated to which the metal pigment composition is applied, the main surface of the metal particles can be disposed so as to follow the surface shape of the object to be treated. As a result, it is possible to more effectively exhibit the glossiness and the like inherent in the metal material constituting the metal particles even in the obtained colored body, to particularly improve the glossiness and the high-class feeling of the colored body, and to particularly improve the scratch resistance of the colored body. In addition, in an ink composition in which the metal pigment is not surface-modified with a specific surface treatment agent, when the metal particles are the scaly particles, the storage stability of the metal pigment composition is likely to be particularly low, and when the metal pigment composition is used as an ink jet composition, the ejection stability of the ink jet composition is likely to be particularly low. In addition, it is not possible to develop an excellent glossiness due to the scaly metal particles.

On the other hand, in the metal pigment composition, when the metal pigment is surface-modified with a specific surface treatment agent, even when the metal particles are the scaly particles, it is possible to surely prevent the occurrence of the above-described problems. That is, when the metal particles are the scaly particles, the effect of the present disclosure is more prominently exhibited.

In the present disclosure, the scaly shape means a shape, such as a flat-plate shape or a curved plate shape, in which an area when observed from a predetermined angle, for example, when viewed in plan, is larger than an area when observed from an angle orthogonal to the observation direction. In particular, the ratio S_{1/}S₀ of the area S₁ [µm²] when observed in the direction that maximizes the projected area, that is, when viewed in plan to the area S₀ [µm²] when observed in the direction that maximizes the area when observing among the directions orthogonal to the observation direction is preferably 2 or more, more preferably 5 or more, and even more preferably 8 or more. Furthermore, the ratio is preferably 10 or more, and more preferably 20 or more. Furthermore, the ratio is preferably 30 or more.

The upper limit of S_{1/}S₀ is not particularly limited, and is preferably 1000, more preferably 500, and even more preferably 100. Furthermore, the upper limit is preferably 80 or less.

As this value, for example, observation can be performed on any 50 particles, and the average value of the calculated values for these particles can be adopted. The observation can be performed using, for example, an electron microscope, an atomic force microscope, or the like.

Alternatively, the volume average particle diameter (D50) described later and the average thickness may be used, and the units may be combined to obtain volume average particle diameter (D50)/average thickness, which may be defined as the above range.

When the metal particles are the scaly particles, the lower limit of the average thickness of the metal particles is not particularly limited, and is preferably 5 nm, more preferably 10 nm, and even more preferably 15 nm. In addition, when the metal particles are the scaly particles, the upper limit of the average thickness of the metal particles is not particularly limited, and is preferably 90 nm, more preferably 70 nm, even more preferably 50 nm, and most preferably 30 nm. Furthermore, the upper limit is preferably 20 nm or less.

The average thickness can be measured using an atomic force microscope. Although not limited, it can be measured by, for example, an atomic force microscopy using NanoNavi E-Sweep (manufactured by SII Nanotechnology Inc.). For example, measurement is performed with any 50 metal particles to obtain the average value.

As a result, the effect of the scaly particles as described above is more prominently exhibited.

The lower limit of the volume average particle diameter of the metal particles is not particularly limited, and is preferably 0.20 µm, more preferably 0.25 µm, and even more preferably 0.30 µm. In addition, the upper limit of the volume average particle diameter of the metal particles is not particularly limited, and is preferably 1.00 µm, more preferably 0.90 µm, and even more preferably 0.80 µm.

As a result, while improving the storage stability and water resistance of the ink composition, it is possible to more effectively prevent the occurrence of undesired color unevenness in the colored body produced by using the ink composition and to improve the glossiness and scratch resistance of the colored body.

In the present disclosure, the volume average particle diameter refers to the median diameter of the volume distribution measured by using the laser diffraction and scattering method for the particle dispersion liquid, and is the size of the particles that cumulatively represents exactly 50% of the median value, when a large number of measurement results are expressed as cumulative abundance ratios for each size. When the metal particles are the scaly particles, the volume average particle diameter is determined based on the shape and size of the metal particles when converted into spheres.

In addition, the upper limit of the particle diameter D90 at a volume cumulative distribution ratio of 90% from the fine particle side of the metal particles contained in the ink composition is preferably 1.50 µm, more preferably 1.20 µm, and even more preferably 0.95 µm.

As a result, while improving the storage stability and water resistance of the ink composition, it is possible to more effectively prevent the occurrence of undesired color unevenness in the colored body produced by using the ink composition and to improve the glossiness and scratch resistance of the colored body.

The lower limit of the content of the metal particles in the ink composition is not particularly limited, and is preferably 0.1% by mass, more preferably 0.2% by mass, and even more preferably 0.3% by mass. Furthermore, the lower limit is preferably 0.5% by mass or more. In addition, the upper limit of the content of the metal particles in the ink composition is not particularly limited, and is preferably 30% by mass, more preferably 20% by mass, even more preferably 15% by mass, and particularly preferably 10% by mass. Furthermore, the upper limit is preferably 5% by mass or less. Furthermore, the upper limit is preferably 2.4% by mass or less, more preferably 2.2% by mass or less, and even more preferably 1.8% by mass or less.

As a result, while improving the storage stability and water resistance of the ink composition, it is possible to particularly improve the glossiness and scratch resistance of the colored portion formed by using the ink composition.

The metal particles may be produced by any method, and when the metal particles are made of Al, it is preferable that the metal particles are obtained by forming a film made of Al by a vapor phase film forming method and then pulverizing the film. As a result, in the colored portion formed by using the metal pigment composition of the present disclosure, it is possible to more effectively express the glossiness and the like inherent in Al. In addition, it is possible to suppress variations in characteristics among the particles. In addition, by using this method, even relatively thin metal particles can be suitably produced.

When the metal particles are produced by using such a method, the metal particles can be suitably produced, for example, by forming a film made of Al on the base material. As the base material, for example, a plastic film such as polyethylene terephthalate, can be used. In addition, the base material may have a release agent layer on the film-forming surface.

In addition, the pulverization is preferably performed by applying ultrasonic vibration to the film in a liquid. As a result, metal particles having a particle diameter as described later can be easily and surely obtained, and variations in size, shape, and characteristics among the metal particles can be suppressed.

In addition, when pulverizing by the above method, as the liquid, alcohols, hydrocarbon-based compounds, ether-based compounds, and polar compounds, such as propylene carbonate, γ-butyrolactone, N-methyl-2-pyrrolidone, N, N-dimethylformamide, N, N-dimethylacetamide, dimethyl sulfoxide, cyclohexanone, and acetonitrile, can be suitably used. By using such a liquid, the productivity of the metal particles is particularly improved while preventing unintentional oxidation of the metal particles, and the variation in size, shape, and characteristics among the particles can be particularly reduced.

Examples of alcohols include methanol, ethanol, propanol, butanol, and the like. In addition, examples of the hydrocarbon-based compound include n-heptane, n-octane, decane, dodecane, tetradecane, toluene, xylene, cymene, durene, indene, dipentene, tetrahydronaphthalene, decahydronaphthalene, cyclohexylbenzene, and the like. In addition, examples of ether-based compounds include ethylene glycol dimethyl ether, ethylene glycol diethyl ether, ethylene glycol methyl ethyl ether, diethylene glycol dimethyl ether, diethylene glycol diethyl ether, tetraethylene glycol monobutyl ether, diethylene glycol methyl ethyl ether, diethylene glycol monobutyl ether acetate, diethylene glycol n-butyl ether, tripropylene glycol dimethyl ether, triethylene glycol diethyl ether, 1,2-dimethoxyethane, bis (2-methoxyethyl) ether, p-dioxane, tetrahydrofuran, and the like.

### 1-2. Specific Surface Treatment Agent

The above-described metal particles are surface-modified with a specific surface treatment agent.

The specific surface treatment agent is at least one selected from the group consisting of the compound represented by formula (1) and the compound represented by formula (2),

(R-O)ₐP(O)(OH)₃₋ₐ ··· (1)

(R)P(O)(OH)₂ ··· (2)

where R is independently a hydrocarbon group having a carbon skeleton having 13 or more carbon atoms, and a is 1 or 2.

As the specific surface treatment agent, one type or two or more types may be selected. When two or more types are selected, one or more types from the compounds represented by formula (1) and one or more types from the compounds represented by formula (2) may be selected, two or more types may be selected from the compound represented by formula (1), and two or more types may be selected from the compound represented by formula (2). In those cases, the above R and a may be independent for each selected compound. In addition, when a is 2, R in the compound may be independent for each R.

In the above formula, R is a hydrocarbon group having a carbon skeleton having 13 or more carbon atoms, and this is a hydrocarbon group having a skeleton in which 13 or more carbon atoms are continuously bonded.

In formula (1), any carbon atom of the carbon skeleton having 13 or more carbon atoms in R is directly bonded to the oxygen atom O in (R - O), and the oxygen atom is directly bonded to a phosphorus atom P.

In formula (2), any of the carbon atoms in the carbon skeleton having 13 or more carbon atoms in R is directly bonded to the phosphorus atom P.

Therefore, when the treatment agent reacts with the metal pigment at the portion of the hydroxyl group bonded to the phosphorus atom of the treatment agent to surface-modify the metal pigment, it is presumed that R can be present at a position relatively close to the metal pigment, and the dispersion stability of the metal pigment can be improved.

It is presumed that excellent dispersion stability can be imparted to the metal pigment because R is a hydrocarbon group having a relatively long chain.

When the dispersion stability of the metal pigment is inferior, agglomerates of the metal pigment are generated, and the ejection stability is inferior due to this agglomerates. In addition, the gloss may be inferior due to the inability of the agglomerates of the metal pigment to neatly arrange on the recording medium, the inability to eject a sufficient amount of ink to adhere to the recording medium, and the like. However, the ink of the present embodiment is excellent in dispersion stability, ejection stability, gloss, and the like.

Examples of hydrocarbon groups having a carbon skeleton having 13 or more carbon atoms include saturated hydrocarbon groups having no double bond or triple bond between carbons, and unsaturated hydrocarbon group having a double bond or triple bond between carbons. The hydrocarbon group R may be an aromatic hydrocarbon group having an aromatic ring structure in the carbon skeleton, a chain or cyclic aliphatic hydrocarbon group, or the like. In particular, a chain aliphatic hydrocarbon group is more preferable because of the excellent dispersion stability. The chain aliphatic hydrocarbon group may be a branched chain type or a linear type, and is preferably the linear type in that the dispersion stability, ejection stability, gloss, and the like are more excellent. In this case, for example, since a large number of specific surface treatment agents can be modified on the surface of the metal pigment, it is presumed that a sufficient effect is exhibited.

Since R is a hydrocarbon group, R has a bond between a carbon atom and a hydrogen atom. When R has no substituent, R is a hydrocarbon group made of a carbon atom and a hydrogen atom. For example, when R is a chain aliphatic hydrocarbon group, an alkyl group, an alkenyl group, an alkynyl group, and the like is exemplified. In this case, in particular, when the ink is a solvent-based ink, the dispersion stability is more excellent, which is preferable.

R may be a hydrocarbon group having a carbon skeleton having 13 or more carbon atoms, may contain a carbon atom and a hydrogen atom, and may have at least a bond between the carbon atom and the hydrogen atom. Therefore, some of the hydrogen atoms that the hydrocarbon group can contain may be substituted with a substituent. Examples of the substituent include a carboxyl group, a hydroxyl group, an amino group, and an oxyalkylene-containing group. In this case, depending on the type of the liquid medium component, the affinity of the metal pigment with the liquid medium component is imparted, and the dispersion stability is more excellent, which is preferable. In particular, it is preferable that the ink composition of the present disclosure is an aqueous composition. In particular, when substituted with a carboxyl group, a hydroxyl group, an amino group, an oxyalkylene-containing group or the like, water affinity is imparted, which is preferable. When some of the hydrogen atoms that the hydrocarbon group R can contain are substituted with substituents, the number of substituents is preferably 50% or less, more preferably 10% or less, of the number of hydrogen atoms of the hydrocarbon group when R does not have a substituent. In addition, the number of substituents is preferably 5 or less, and particularly preferably 3 or less. Furthermore, the number of substituents is preferably 2 or less, and more preferably 1 or less. In addition, the number of substituents is 0 or more, and the lower limit of the number of substituents when substituted with a substituent is 1 or more. When the substituent is provided at the carbon atom located at the farthest position from the phosphorus atom in the formulae, the dispersion stability is more excellent, which is preferable.

When the substituent is an oxyalkylene-containing group, the oxyalkylene-containing group is a group having an oxyalkylene structure. The oxyalkylene structure is also referred to as an alkylene oxide structure. The oxyalkylene-containing group has one or more alkylene oxide units, and may have two or more alkylene oxide units. In particular, the oxyalkylene-containing group may have a plurality of alkylene oxide units and have a structure in which the alkylene oxide units are repeated. The number of repetitions of the alkylene oxide unit is preferably 10 or less, and more preferably 4 or less. The lower limit is 1 or more, preferably 2 or more, and more preferably 3 or more. The number of carbon atoms of the alkylene in the alkylene oxide unit is preferably 1 or more and 4 or less.

R in the above formulas (1) and (2) is a hydrocarbon group having a carbon skeleton having 13 or more carbon atoms, and preferably has a carbon skeleton having 14 or more and 30 or less carbon atoms. Furthermore, the carbon skeleton preferably has 15 or more and 28 or less carbon atoms, even more preferably 16 or more and 25 or less, and more preferably 17 or more and 25 or less.

As a result, the ejection stability of the ink composition can be improved. It is presumed that this is related to the fact that the dispersion stability of the metal particles in the ink can be improved. In addition, from such a fact, the glossiness of the recorded material produced by using the ink composition can be further improved.

The compound represented by formula (1) is a compound in which one or two of the three hydroxyl groups of phosphoric acid are esterified with an R group. The compound represented by formula (2) is a compound in which the hydrogen atom bonded to the phosphorus atom of the phosphonic acid is substituted with an R group.

The ink composition of the present disclosure may contain a plurality of types of compounds as a specific surface treatment agent. In such a case, the same metal particles may be surface-treated with a plurality of types of surface treatment agents. In addition, the ink composition of the present disclosure may contain metal particles surface-treated with specific surface treatment agents different from each other.

For example, as described above, when a metal film formed by a vapor phase film forming method is pulverized in a liquid to form metal particles, the surface treatment of metal particles with a specific surface treatment agent may be performed by containing a specific surface treatment agent in the liquid.

When the same metal particles are surface-treated with a plurality of types of specific surface treatment agents, the surface treatment may be performed by dividing into a plurality of steps corresponding to each specific surface treatment agent, or the surface treatment may be performed by a plurality of types of specific surface treatment agents in the same step.

The lower limit of the content of the specific surface treatment agent in the ink composition is not particularly limited, and is preferably 0.01% by mass, more preferably 0.03% by mass, and even more preferably 0.05% by mass.

On the other hand, the upper limit of the content of the specific surface treatment agent in the metal pigment composition is not particularly limited, and is preferably 10% by mass, more preferably 7.0% by mass, and even more preferably 5.0% by mass. Furthermore, the upper limit is preferably 2.0% by mass or less.

As a result, the dispersion stability of the metal particles in the ink composition, and the glossiness and the scratch resistance of the colored body produced by using the metal pigment composition can be further improved.

In particular, the lower limit of the content of the specific surface treatment agent in the ink is not particularly limited, and is preferably 0.01% by mass, more preferably 0.03% by mass, and even more preferably 0.05% by mass. Furthermore, the lower limit is preferably 0.1% by mass or more, even more preferably 0.2% by mass or more, and more preferably 0.3% by mass or more.

On the other hand, the upper limit of the content of the specific surface treatment agent in the ink is not particularly limited, and is preferably 1.5% by mass, more preferably 1.0% by mass, and even more preferably 0.8% by mass. Furthermore, the upper limit is preferably 1.0% by mass or less, even more preferably 0.5% by mass or less, and particularly preferably 0.2% by mass or less.

The content of the specific surface treatment agent in the ink composition is not particularly limited, and is preferably 1.0 part by mass or more and 50 parts by mass or less, more preferably 1.5 parts by mass or more and 40 parts by mass or less, and even more preferably 2.0 parts by mass or more and 30 parts by mass or less with respect to 100 parts by mass of the metal particles. Furthermore, the content is preferably 5 parts by mass or more and 20 parts by mass or less. Alternatively, the content is preferably 10 parts by mass or more and 28 parts by mass or less.

The above-described content ratio and content are the content ratio and content of the specific surface treatment agent contained in the ink composition, including the specific surface treatment agent that modifies the surface of the metal pigment.

As a result, the ejection stability of the ink composition, the dispersion stability of the metal particles, and the glossiness of the colored body produced by using the metal pigment composition can be further improved. In addition, the ejection stability can be further improved when the product is stored for a long period of time or when the product is stored under harsh conditions.

### 1-3. Liquid Medium Component

The ink composition of the present disclosure contains a liquid medium component.

The liquid medium component is a component that forms a liquid by itself, and in the ink composition of the present disclosure, the liquid medium component mainly has a function as a dispersion medium for dispersing the metal particles. In addition, the composition can be easily adhered to an adhered body. That is, since the ink contains the liquid medium component, the viscosity of the ink can be made relatively low, the ink can be easily ejected by ink jet, and adjustments such as lowering the surface tension of the ink are easy.

In addition, since the ink composition contains the liquid medium component, the ink can be ejected by ink jet.

Examples of the liquid medium component include water and various organic solvents.

When the ink is the water-based ink or the solvent-based ink containing the liquid medium component, the liquid medium component evaporates from the ink adhering to the recording medium and the solid content contained in the ink becomes a dry coating film, so that the ink is fixed. In this process, a phenomenon called leafing occurs in which the metal pigment contained in the ink floats and is neatly arranged above the ink, so that an excellent metallic glossiness can be obtained. Since the ink contains liquid medium components and has a relatively low viscosity, leafing is likely to occur, and it takes time for the liquid medium components to evaporate, so that the time for leafing to occur is likely to be secured. Therefore, when the ink is a water-based ink or a solvent-based ink containing a liquid medium component, it is preferable that an excellent metallic gloss can be easily obtained.

On the other hand, when the ink is a water-based ink or a solvent-based ink containing a liquid medium component, since the liquid medium component has a relatively low viscosity, the metal pigment is likely to settle. In particular, when the dispersion stability of the metal pigment is insufficient, the metal pigment is likely to settle and the ejection stability tends to be inferior, so that it is necessary to pay attention to the ejection stability and the dispersion stability. In addition, the dispersion stability of the metal pigment may be inferior depending on the liquid medium component, so that attention is necessary to be paid. Even in such a situation, the ink composition of the present embodiment is required in that excellent dispersion stability and ejection stability can be obtained.

From this point of view, the ink composition is preferably not a photocurable ink that is used by irradiating the ink composition with light such as ultraviolet rays to cure the ink composition.

The solvent-based ink and the water-based ink are referred to as inks containing a liquid medium component in an amount of 40% by mass or more. The solvent-based ink refers to an ink having a water content of less than 30% by mass in the liquid medium components contained in the ink.

In addition, the water-based ink refers to an ink having a water content of 30% by mass or more in the liquid medium components contained in the ink.

Compared with the water-based ink, the solvent-based ink is superior in wet spreading of the ink, especially on a low absorption or non-absorbent recording medium. In addition, the ink tends to dry more slowly than the water-based ink. As a result, it is preferable that the metal pigment is likely to be leafed on the recording medium and tends to obtain higher gloss. On the other hand, the water-based ink is preferable in terms of reducing environmental pollution.

When the ink composition of the present disclosure is a solvent-based ink (solvent-based composition) containing an organic solvent as a liquid medium component, the dispersion stability of the metal particles in the ink composition, and the glossiness and the scratch resistance of the colored body produced by using the ink composition can be further improved. In addition, when the recording medium is a low absorption or non-absorbent recording medium, the adhesion and abrasion resistance of the ink are more excellent, which is preferable.

In addition, when the ink composition of the present disclosure is a water-based ink (aqueous composition) containing water as a liquid medium component, it is possible to further reduce the environmental load of the ink composition while sufficiently improving the dispersion stability of the metal particles in the ink composition, and the glossiness and the scratch resistance of the colored body produced by using the ink composition.

For example, as the organic solvent contained in the ink composition of the present disclosure, alcohols, hydrocarbon-based compounds, ether-based compounds, ketones, esters, and polar compounds, such as propylene carbonate, N-methyl-2-pyrrolidone, N, N-dimethylformamide, N, N-dimethylacetamide, dimethyl sulfoxide, cyclohexanone, and acetonitrile, can be suitably used.

Examples of alcohols include monohydric alcohols, such as methanol, ethanol, propanol, isopropanol and butanol; polyhydric alcohols, such as ethylene glycol, propylene glycol, 1,2-hexanediol, and the like. In addition, examples of the hydrocarbon-based compound include n-heptane, n-octane, decane, dodecane, tetradecane, toluene, xylene, cymene, durene, indene, dipentene, tetrahydronaphthalene, decahydronaphthalene, cyclohexylbenzene, and the like.

Examples of ether-based compounds include glycol ethers and the like. Examples of glycol ethers include ethylene glycol dimethyl ether, ethylene glycol diethyl ether, ethylene glycol methyl ethyl ether, diethylene glycol dimethyl ether, diethylene glycol diethyl ether, tetraethylene glycol monobutyl ether, diethylene glycol methyl ethyl ether, diethylene glycol monobutyl ether acetate, diethylene glycol n-butyl ether, tripropylene glycol dimethyl ether, triethylene glycol diethyl ether, 1,2-dimethoxyethane, bis (2-methoxyethyl) ether, and the like.

Examples of glycol ethers include glycol diether and glycol monoether, and glycol diether is preferable.

Ether-based compounds are also referred to as ethers. Other examples of ethers include p-dioxane and tetrahydrofuran. In addition, examples of ketones include acetone, methyl ethyl ketone, diethyl ketone, and the like.

Examples of the esters include ethyl acetate, propyl acetate, butyl acetate, and the like. Examples of the esters include cyclic esters. Examples of the cyclic ester include lactones, such as γ-butyrolactone.

When the ink composition of the present disclosure is a solvent-based ink, the organic solvent preferably contains one type or two or more types selected from the group consisting of ether-based compounds, esters, ketones, alcohols, and hydrocarbon-based compounds. Furthermore, it is more preferable to contain one type or two or more types selected from the group consisting of ether-based compounds and esters. In particular, one or more types selected from glycol ethers and cyclic esters is preferable, and glycol ethers are particularly preferable.

In particular, it is even more preferable to contain one type or two or more types selected from the group consisting of diethylene glycol diethyl ether, tetraethylene glycol monobutyl ether, and γ-butyrolactone.

As a result, the dispersion stability of the metal particles in the ink composition, and the glossiness and the scratch resistance of the colored body produced by using the ink composition can be further improved. In addition, the moisturizing property of the ink composition can be improved. For example, when the ink composition is an ink jet ink, it is possible to more effectively prevent the solid content of the ink composition from being unintentionally extracted due to drying with an ink jet head or the like. In addition, the viscosity of the ink composition can be adjusted more suitably.

In particular, when the ink of the present disclosure is a solvent-based composition containing an organic solvent as a main liquid medium component, the ratio of the organic solvent to all the liquid medium components constituting the metal pigment composition of the present disclosure is preferably 30% by mass or more, more preferably 40% by mass or more, even more preferably 50% by mass or more, more preferably 60% by mass or more, and even more preferably 70% by mass or more. The upper limit is 100% by mass or less.

In addition, the lower limit of the content of the organic solvent with respect to the total amount of the ink composition is preferably in the above range, and the upper limit is preferably 99% by mass or less.

As a result, the above-described effect is more prominently exhibited.

When the ink composition of the present disclosure is a solvent-based composition, the content of water in the total liquid medium components is less than 30% by mass. Furthermore, the content of water in the total liquid medium components is preferably sufficiently low, and more specifically, the content is preferably 5.0% by mass or less, more preferably 1.0% by mass or less, and even more preferably 0.1% by mass or less. The lower limit is 0% by mass.

In addition, the content of water with respect to the total amount of the ink composition may be in the above range.

When the ink composition of the present disclosure is an aqueous composition containing water as a main liquid medium component, the liquid medium component may contain an organic solvent together with water.

In the case of an aqueous composition, the ratio of the organic solvent in the total liquid medium component is preferably 70% or less, even more preferably 50% by mass or less, more preferably 40% by mass or less, and even more preferably 30% by mass or less. The lower limit is 0% by mass or more, and may be 10% by mass or more.

When the ink composition of the present disclosure is an aqueous composition, the organic solvent contained together with water is preferably a liquid component exhibiting solubility in water, that is, a water-soluble organic solvent.

As a result, the dispersion stability of the metal particles in the ink composition, and the glossiness and the scratch resistance of the colored body produced by using the ink composition can be further improved. In addition, the moisturizing property of the ink pigment composition can be improved, and for example, it is possible to more effectively prevent the solid content of the ink composition from being unintentionally extracted due to drying with an ink jet head or the like. In addition, the viscosity of the ink composition can be adjusted more suitably.

The water-soluble organic solvent may be any water-soluble liquid component, and for example, a liquid component having a solubility in water at 25°C of 2 g/100 g or more can be suitably used.

The boiling point of the water-soluble organic solvent under 1 atm is preferably 110°C or higher and 300°C or lower.

As a result, the moisturizing property of the ink composition can be further improved. For example, when the ink composition is an ink jet ink, it is possible to more effectively prevent the solid content of the metal pigment composition from being unintentionally extracted due to drying with an ink jet head or the like. Therefore, the ejection stability of the ink composition by the ink jet method can be further improved. In addition, after the ink composition is ejected, the ink composition can be volatilized relatively easily when necessary, and it is possible to more effectively prevent the liquid medium component from unintentionally remaining in the colored body produced by using the ink composition.

When the ink composition of the present disclosure is an aqueous composition, examples of the water-soluble organic solvent contained together with water include polyols, glycol ethers, amides, alcohols, and the like.

The polyols are compounds having a hydroxyl group having a divalent value or higher, and examples thereof include polyols having a trivalent value or higher, glycols, alkanediols having 5 or more carbon atoms, and the like.

Examples of polyols having a trivalent value or higher include glycerin and the like.

Examples of glycols include alkanediols having 4 or less carbon atoms, those in which hydroxyl groups are condensed between molecules of alkanediols, and the like. Examples of glycols include ethylene glycol, diethylene glycol, triethylene glycol, propylene glycol, and the like.

Examples of the alkanediol having 5 or more carbon atoms include 1,2-pentanediol, 2-hexanediol, and the like.

Examples of glycol ethers include glycol diether and glycol monoether, and glycol monoether is preferable. Examples of glycol monoethers include triethylene glycol monobutyl ether and the like.

Examples of the amides include cyclic amides and acyclic amides, and examples of the cyclic amides include lactams and the like. Examples of lactams include 2-pyrrolidone and the like.

Examples of alcohols include monohydric alcohols and the like. Examples of monohydric alcohols include ethanol, methanol, propanol, isopropanol, butanol, phenoxyethanol, and the like.

The organic solvent may be used alone or in combination of two or more types selected from these organic solvent.

When the ink composition of the present disclosure is an aqueous composition, the ratio of water in the total liquid medium components constituting the ink composition of the present disclosure is 30% by mass or more, more preferably 40% by mass or more, even more preferably 50% by mass or more, and even more preferably 55% by mass or more. When the ink composition of the present disclosure is an aqueous composition, the upper limit of the ratio of water in the total liquid medium components constituting the ink composition of the present disclosure is 100% by mass.

In addition, the lower limit of the water content with respect to the total mass of the ink composition may be set to the above range, and the upper limit may be set to 99% by mass or less.

The lower limit of the content of the liquid medium component in the ink composition of the present disclosure is preferably 50% by mass or more, even more preferably 60.0% by mass, more preferably 70.0% by mass, and even more preferably 75.0% by mass. In addition, the upper limit of the content of the liquid medium component in the ink composition of the present disclosure is not particularly limited, and is preferably 99.7% by mass, more preferably 99.5% by mass, and even more preferably 99.0% by mass.

As a result, the viscosity of the ink composition can be made more suitable.

### 1-4. Other Components

The ink composition of the present disclosure may contain components other than those described above. Hereinafter, these components are also referred to as other components. Examples of such components include a surface treatment agent other than a specific surface treatment agent, a leveling agent, a binder, a dispersant, a surfactant, a penetration promoter, a moisturizer, a coloring agent, a fixing agent, a fungicide, a preservative, an antioxidant, a chelating agent, a thickener, and the like.

The binder may be a resin, and examples thereof preferably include acrylic resin, polyester resin, urethane resin, cellulosic resin, and the like. The acrylic resin is a resin obtained by at least polymerizing an acrylic monomer, and may be a copolymer resin of an acrylic monomer and another monomer. Examples of other monomers include vinyl monomers and the like.

Examples of the surfactant preferably include silicone-based surfactants, acetylene glycol-based surfactants, and the like.

However, the content of other components in the ink composition of the present disclosure is preferably 5.0% by mass or less, more preferably 3.0% by mass or less, and even more preferably 2.0% by mass or less.

The composition used for preparing the coloring composition is a composition for mixing the composition with other components necessary for the coloring composition to obtain a coloring composition. The composition used for preparing the coloring composition is also referred to as a pigment dispersion liquid or a pigment dispersion used for preparing the coloring composition. Therefore, the content of the metal pigment in the composition used for preparing the coloring composition is higher than the content of the metal pigment in the coloring composition obtained by using the composition used for preparing the coloring composition.

The upper limit of the viscosity of the metal pigment composition of the present disclosure measured in accordance with JIS Z8809 using a rotary viscometer at 25°C is not particularly limited, and is preferably 25 mPa·s, and more preferably 15 mPa·s. In addition, the lower limit of the viscosity of the metal pigment composition of the present disclosure at 25°C measured in accordance with JIS Z8809 using a rotary viscometer is not particularly limited, and is preferably 1.5 mPa·s.

As a result, for example, when the metal pigment composition is an ink ejected by the ink jet method, the droplet ejection of the ink by the ink jet method can be more suitably performed.

### 2. Recording Medium

The recording medium is an object to be colored, that is, a colored target body, to which the ink composition is adhered.

Examples of the recording medium include ink-absorbing recording media such as paper and cloth. This is a recording medium in which the recording surface of the recording medium easily absorbs ink.

Examples of the paper include plain paper, ink jet paper, corrugated cardboard, and the like.

As the cloth, natural fibers or synthetic fibers such as cotton, polyester, and wool, non-woven fabric, and the like can be used.

In addition, examples thereof include non-absorbent recording media made of plastic materials, metals, glass, ceramics, wood, and the like. This is a recording medium in which the recording surface of the recording medium does not easily absorb ink.

Examples of the recording medium made of a plastic material include a plastic film, a plastic sheet, and the like. The plastic are not limited and examples thereof include vinyl chloride, polyester, polyolefin, and the like. Examples of polyester include polyethylene terephthalate and the like.

In addition, a low absorption recording medium can be included. This is a recording medium having a recording surface having the lowest absorbency next to the non-absorbent recording medium. Examples of the low absorption recording medium include a recording medium provided with a coating layer (receiving layer) on the surface for receiving a liquid, and examples of the recording medium having a base material made of paper include printed paper. The coating layer is hard to absorb ink, and examples thereof include a layer in which particles, such as inorganic compounds, are coated with a binder.

The low absorption or non-absorbent recording medium is a recording medium having a property of not absorbing liquid at all or hardly absorbing liquid. For example, a non-absorbent or low absorption recording medium is preferably "a recording medium in which the amount of water absorbed from the start of contact to 30 msec^{1/2} in the Bristow method is 10 mL/m² or less".

This Bristow method is the most popular method for measuring the amount of liquid absorbed in a short time, and is also adopted by the Japan Technical Association of the Pulp and Paper Industry (JAPAN TAPPI). Details of the test method are described in Standard No. 51 "Paper and Paperboard - Liquid Absorption Test Method - Bristow Method" of "JAPAN TAPPI Paper and Pulp Test Method 2000 Edition".

On the other hand, the absorbent recording medium means a recording medium that does not correspond to non-absorbent and low absorption recording medium.

In addition, the shape of the recording medium is not particularly limited, and may be any shape, such as a sheet shape, a plate shape, and an object shape.

### 3-1. Ink Set

The ink set of the present embodiment is an ink set including the above-described ink composition and an ink jet ink composition which is a colored ink containing a coloring material.

"Ink set" is referred to as two or more inks used for recording in a set. Each ink included in the ink set may be contained in a separate ink container for each ink, or may be contained in an integrated ink container.

The ink set includes at least one (one type) of the above-described ink compositions and at least one (one type) of the colored ink compositions. Either or both of the composition and the colored ink composition described above may be provided with two or more.

### 3-2. Colored Ink

The ink set according to the present embodiment includes the ink jet ink composition which is the colored ink. The colored ink is an ink used for coloring a recording medium with a coloring agent contained in the colored ink. The colored ink is also referred to as a colored ink composition.

With the ink set of the present embodiment, an image having a metallic glossiness and an image colored by a coloring agent can be recorded on the recording medium.

In addition, by recording the ink composition containing the above-described metal pigment and the colored ink in an overlapping manner, it is possible to record an image having a metallic glossiness and colored by the coloring agent. In this case, the metallic glossiness may be blocked by the coloring agent and the metallic glossiness may be inferior. According to the ink set of the present embodiment, since the ink composition containing the metal pigment has excellent gloss, it is preferable that a colored image having an excellent metallic glossiness can be recorded.

The colored ink can be the same as the ink composition containing the metal pigment in terms of other components and compositions, except that the colored ink contains a coloring agent instead of the metal pigment.

### 3-3. Coloring Agent

The colored ink contains a coloring agent. The coloring agent is not the metal pigment described above. Examples of the coloring agent include dyes, pigments, and the like. The coloring agent is preferably, for example, a chromatic coloring material such as cyan, yellow, or magenta, or an achromatic coloring material such as white or black.

The coloring agent may be either a dye or a pigment, or a mixture. The coloring agent preferably contains a pigment. The pigment is excellent in storage stability such as light resistance, weather resistance, and gas resistance, and is preferably an organic pigment from that viewpoint.

Specifically, as the pigment, azo pigment, such as insoluble azo pigment, condensed azo pigment, azo lake, and chelate azo pigment, polycyclic pigment, such as phthalocyanine pigment, perylene and perinone pigment, anthraquinone pigment, quinacridone pigment, dioxane pigment, thioindigo pigment, isoindolinone pigment, and quinophthalone pigment, dye chelate, dyeing lake, nitro pigment, nitroso pigment, aniline black, daylight fluorescent pigment, carbon black, and the like are used. The pigment may be used alone or in combination of two or more types.

Specific examples of the pigment are not particularly limited, and examples thereof include the following.

Examples of the black pigment include carbon blacks, such as No. 2300, No. 900, MCF88, No. 33, No. 40, No. 45, No. 52, MA7, MA8, MA100, and No. 2200B (all manufactured by Mitsubishi Chemical Corporation), Raven 5750, Raven 5250, Raven 5000, Raven 3500, Raven 1255, and Raven 700 (all manufactured by Columbia Carbon Co., Ltd.), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (manufactured by CABOT JAPAN K. K.), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa AG).

Examples of the yellow pigment include C. I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

Examples of the magenta pigment include C. I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57: 1, 88, 112, 114, 122, 123, 144, 146, 149, 150, 166, 168, 170, 171, 175, 176, 177, 178, 179, 184, 185, 187, 202, 209, 219, 224, and 245, or C. I. Pigment Violet 19, 23, 32, 33, 36, 38, 43, and 50.

Examples of the cyan pigment include C. I. Pigment Blue 1, 2, 3, 15, 15: 1, 15: 2, 15: 3, 15: 34, 15: 4, 16, 18, 22, 25, 60, 65, and 66, and C. I. Bat blue 4 and 60.

In addition, the pigments other than magenta, cyan, and yellow are not particularly limited, and examples thereof include C. I. Pigment Green 7 and 10, C. I. Pigment Brown 3, 5, 25, and 26, and C. I. Pigment Orange 1, 2, 5, 7, 13, 14, 15, 16, 24, 34, 36, 38, 40, 43, and 63.

Examples of the white coloring material include C. I. Pigment White 1, which is basic zinc carbonate, C. I. Pigment White 4 made of zinc oxide, C. I. Pigment White 5 made of a mixture of zinc sulfide and barium sulfate, C. I. Pigment White 6 made of titanium dioxide, C. I. Pigment White 6: 1 made of titanium dioxide containing other metal oxides, C. I. Pigment White 7 made of zinc sulfide, C. I. Pigment White 18 made of calcium carbonate, C. I. Pigment White 19 made of clay, C. I. Pigment White 20 made of mica titanium, C. I. Pigment White 21 made of barium sulfate, C. I. Pigment White 22 made of gypsum, C. I. Pigment White 26 made of magnesium oxide and silicon dioxide, C. I. Pigment White 27 made of silicon dioxide, C. I. Pigment White 28 made of anhydrous calcium silicate, and the like. Among these, it is preferable to use C. I. Pigment White 6 which is excellent in color development and concealment.

In addition, as dyes, for example, various dyes normally used for ink jet recording, such as direct dyes, acidic dyes, edible dyes, basic dyes, reactive dyes, dispersion dyes, construction dyes, soluble construction dyes, reaction dispersion dyes, and the like, can be used.

When the colored ink contains a pigment as a coloring agent, it is preferable to contain a dispersant for dispersing the pigment. Examples of the dispersant include a dispersant resin and other surfactants. Alternatively, when the pigment has an acidic group on the surface, it can be a self-dispersing pigment that can be dispersed without a dispersant.

### 4. Recording Method

Next, the recording method of the present disclosure will be described.

### 4-1. Adhesion Step

The recording method of the present disclosure includes a step (adhesion step) of adhering the ink composition containing the above-described metal pigment to the recording medium by the ink jet method ejected from the ink jet head.

As a result, it is possible to provide a recording method capable of recording a recorded material having excellent ejection stability, ink having excellent dispersion stability, and excellent glossiness.

When the ink composition is ejected by the ink jet method, as the method of the ink jet method, a piezo method, a method of ejecting ink by bubbles generated by heating the ink, or the like can be used, and the piezo method is preferable from the viewpoint of difficulty in deteriorating the metal pigment.

The ink composition can be ejected by the ink jet method using a known droplet ejection device.

The colored portion formed by the ink composition may have, for example, a predetermined pattern, or may be formed on the entire surface of the object to be treated. 4-2. Primary Heating Step

The recording method according to the present embodiment may include a primary heating step which is a step of heating the ink composition adhering to the recording medium at an early stage.

The primary heating step is a step of heating and drying the ink adhering to the recording medium at an early stage. The primary heating step is a heating step for drying at least a part of the liquid medium of the ink at least to the extent that the flow of the ink adhering to the recording medium is reduced. In the primary heating step, the ink may be adhered to the heated recording medium, or the ink may be heated early after the adhesion.

It is preferable that the ink droplets landed on the recording medium start heating within 0.5 seconds at the latest from the landing of the ink droplets.

The primary heating step is preferably performed for each ink composition to be adhered. For example, when the colored ink is also adhered, it is preferable to adhere to each ink composition to be adhered.

The primary heating step is preferably blowing warm air to the recording medium by an IR heater, microwave radiation, a platen heater, or a fan.

The heating in the primary heating step may be performed at least before the ink adhesion step, at the same time as the adhesion, or at an early stage after the adhesion, and is preferably performed at the same time. The ink adhesion step can be performed in such a heating order. In particular, it is preferable that the recording medium is heated and the ink composition is adhered to the heated recording medium by the ink adhesion step.

When the primary heating step is provided, since the ink composition can be quickly dried on the recording medium, it is preferable that bleeding of the ink can be prevented. In particular, it is preferable that bleeding between the ink composition containing the metal pigment and the colored ink can be prevented.

On the other hand, when the primary heating step is provided, since the ink dries quickly, the metal pigment cannot secure sufficient time for leafing and the gloss may be inferior, and the ejection stability may be inferior due to the heat of the primary heating step. However, according to the ink composition containing the metal pigment of the present embodiment, it is preferable that excellent gloss and ejection stability can be obtained even when the primary heating step is performed.

The surface temperature of the recording surface of the recording medium in the primary heating step of heating the ink composition is preferably 30°C or higher. On the other hand, the surface temperature is preferably 60°C or lower. Furthermore, the surface temperature is preferably 35°C or higher and 55°C or lower, and even more preferably 40°C or higher and 50°C or lower. When the surface temperature of the recording medium is in the above aspect, the prevention of bleeding or the ejection stability is more excellent, which is preferable.

The surface temperature of the recording medium in the primary heating step is the surface temperature of the recording medium when the ink is adhered, or the temperature of the recording medium during heating when heating is performed after the adhesion. In addition, the surface temperature is also the highest temperature recorded.

### 4-3. Post-heating Step

The recording method according to the present embodiment may include a post-heating step (secondary heating step) of heating the recording medium after the ink adhesion step.

The post-heating step is a heating step in which the recording is completed and the recorded material is sufficiently heated to the extent that the recorded material can be used. The post-heating step is a heating step for sufficiently drying the solvent component of the ink. The post-heating step is preferably started more than 0.5 seconds after the ink adhering to the recording medium adheres. For example, it is preferable to start heating the region more than 0.5 seconds after the adhesion of ink to a recording region on the recording medium is completed.

The recording medium can be heated in the post-heating step by using, for example, an appropriate heating unit. In this case, the surface temperature of the recording medium is preferably 50°C or higher, and more preferably 60°C or higher, 70°C or higher, and 75°C or higher. The upper limit is not limited, and is preferably 120°C or lower. In addition, the heating temperature is preferably a softening point or lower of the base material of the recording medium.

### 4-4. Order of Ink Adhesion Steps

The recording method of the present embodiment may include the adhesion step of adhering the above-described colored ink. In this case, the order in which the ink adhesion step is performed is not particularly limited. The ink composition containing the metal pigment may be adhered before the colored ink, or the colored ink may be adhered before the ink composition containing the metal pigment. In addition, the ink composition containing the metal pigment and the colored ink may be adhered to different places on the recording medium, or may be adhered to the same place in an overlapping manner.

By adhering the ink composition containing the metal pigment and the colored ink to the same place in an overlapping manner, it is preferable that an image having a metallic glossiness and colored by the coloring agent can be recorded. In particular, when the ink composition containing the metal pigment is first adhered, and the colored ink is adhered to the layer of the ink composition containing the adhered metal pigment in an overlapping manner, coloring of the image having the metallic glossiness and colored by the coloring agent is more excellent, which is preferable.

The adhesion amount of ink composition containing the metal pigment per unit area is preferably 1 to 10 mg/inch², and more preferably 2 to 7 mg/inch² in the recording region where the ink composition containing the metal pigment and the colored ink are adhered in an overlapping manner. In addition, the adhesion amount of colored ink in the recording region is preferably 0.1 to 7 mg/inch², and more preferably 0.5 to 5 mg/inch². In addition, it is also preferable that each of the maximum adhesion amount of the ink composition containing the metal pigment and the maximum adhesion amount of the colored ink in the recording region where the ink composition containing the metal pigment and the colored ink are adhered in an overlapping manner are within the above ranges.

### 5. Recording Apparatus

A recording apparatus according to an embodiment of the present disclosure is an apparatus including a recording head that ejects the ink composition containing the metal pigment described above and adheres the ink composition to the recording medium, and a recording head that ejects the colored ink and adheres the colored ink to the recording medium, and records by the above-described recording method.

An example of the recording apparatus according to the present embodiment will be described with reference to the drawings.

### 5-1. Outline of Apparatus Configuration

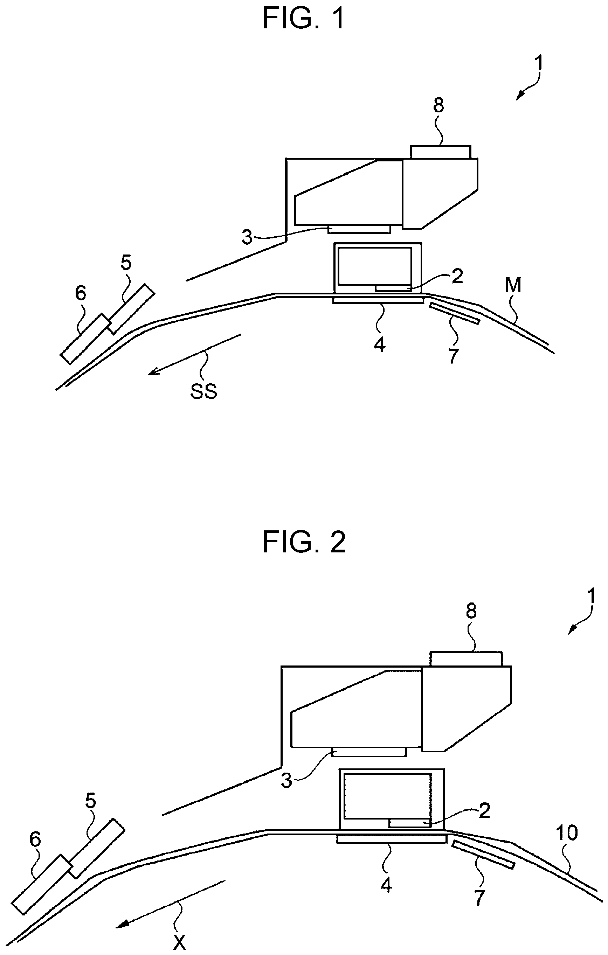

FIG. 1 is a schematic sectional view schematically illustrating a recording apparatus. As illustrated in FIG. 1, the ink jet recording apparatus 1 includes a recording head 2, an IR heater 3, a platen 4, a heating heater 5, a cooling fan 6, a preheater 7, and a ventilation fan 8. In addition, the recording head is mounted on a carriage (not illustrated), and main scanning is performed in the rear/front direction in the drawing to adhere ink to a recording medium M. In addition, the platen 4 is provided with a platen heater (not illustrated). The recording apparatus 1 includes a control portion (not illustrated), and controls each portion to perform recording. In addition, the recording head 2 receives the supply of ink from an ink container (not illustrated).

### 5-2. Configuration related to Ink Jet Head

The recording head 2, which is an ink jet head, has a configuration in which the ink composition is ejected from a nozzle of the recording head 2 and adhered to the recording medium M for recording. The recording head 2 illustrated in FIG. 1 is a serial type recording head, which scans the recording medium M a plurality of times in the main scanning direction relative to the recording medium M to adhere ink to the recording medium M. The recording head 2 is mounted on a carriage (not illustrated). The recording head 2 is scanned a plurality of times in the main scanning direction relative to the recording medium M by the operation of a carriage moving mechanism that moves the carriage in the medium width direction (rear-front direction in the drawing) of the recording medium M. The medium width direction is the main scanning direction of the recording head 2. Scanning in the main scanning direction is also referred to as main scanning.

In addition, here, the main scanning direction is the direction where the carriage on which the recording head 2 is mounted moves. In FIG. 1, the main scanning direction is a direction intersecting the sub-scanning direction, which is the transport direction of the recording medium M indicated by the arrow SS. The main scanning of the recording head 2 and the sub-scanning, which is the transport of the recording medium M, are repeated a plurality of times to record on the recording medium M.

A known method in the related art can be used for ejecting the recording head 2. For example, a method of ejecting droplets by utilizing the vibration of the piezoelectric element, that is, an ejection method of forming ink droplets by mechanical deformation of the electrolytic distortion element is used.

### 5-3. Primary Heating Mechanism

The ink jet recording apparatus 1 can be provided with a primary heating mechanism that performs a primary heating step of heating the recording medium M when the ink is ejected from the recording head 2 and adhered to the recording medium. As the primary heating mechanism, a conduction type, a blower type, a radiation type or the like can be used. In the conduction type, heat is conducted to the recording medium from a member in contact with the recording medium. For example, a platen heater can be included. Although the platen heater is not illustrated, the platen heater is provided integrally with the platen 4. In the blower type, normal temperature air or warm air is sent to the recording medium to dry the ink. For example, a blower fan can be included. In the radiation type, the recording medium is radiated with radiation generating heat to heat the recording medium. For example, IR radiation can be included. In addition, although not illustrated, a heater similar to the platen heater may be provided immediately downstream of the platen 4 in the SS direction. These primary heating mechanisms may be used alone or in combination.

For example, an IR heater 3 and a platen heater are provided as the primary heating mechanism.

When the IR heater 3 is used, the recording medium M can be heated by radiation of infrared rays by the radiation type from the recording head 2 side. As a result, the recording head 2 is likely to be simultaneously heated, and the temperature can be raised without being affected by the thickness of the recording medium M as compared with the case where the recording head 2 is heated from the rear surface of the recording medium M such as the platen heater. The primary heating mechanism may include various fans (for example, ventilation fan 8) that blow warm air or air having the same temperature as the environment to the recording medium M to dry the ink on the recording medium M.

The platen heater can heat the recording medium M at a position facing the recording head 2 via the platen 4. The platen heater is capable of heating the recording medium M by the conduction type, and is used as necessary in the ink jet recording method.

In addition, the ink jet recording apparatus 1 may include a preheater 7 that preheats the recording medium M before the ink adheres to the recording medium M.

### 5-4. Post-heating Mechanism

A post-heating mechanism for performing the post-heating step in which the recording medium is heated to dry and fix the ink after a white ink adhesion step and a non-white ink adhesion step may be provided.

The heating heater 5 used in the post-heating mechanism dries and solidifies the ink adhered to the recording medium M. When the heating heater 5 heats the recording medium M on which the image is recorded, the water content contained in the ink evaporates and scatters more quickly, and an ink film is formed by the resin contained in the ink. In this manner, the ink film is firmly fixed or adhered on the recording medium M to have excellent film-forming properties, and an excellent high-quality image can be obtained in a short time. 5-5. Other Configurations

The ink jet recording apparatus 1 may include a cooling fan 6. After the ink recorded on the recording medium M is dried, the ink on the recording medium M is cooled by the cooling fan 6, so that an ink coating film can be formed on the recording medium M with good adhesion.

The recording apparatus illustrated in FIG. 1 is a serial printer that records by a so-called serial method. The recording apparatus may be a line printer provided with a line head and that records by a line method.

The line head includes a nozzle row in which a plurality of nozzles are arranged in the width direction of the recording medium, has a length equal to or larger than the width of the recorded recording medium M to be transported, and can collectively record an image in the width direction of the recording medium with respect to the transported recording medium M. Recording can be performed by one scanning. Alternatively, recording can be performed in which scanning is performed twice or more by performing scanning performed by transporting the recording medium once, then returning the recording medium in the direction opposite to the transport direction, and transporting the recording medium again to perform scanning again.

The scanning may be performed by a head whose position is fixed to the recording medium to be transported, or may be performed while the head is moving to the recording medium fixed to a platen region.

The recording apparatus capable of performing recording by the line method can be the same as the configuration illustrated in FIG. 1 except that the recording head 2 is changed to the line head. Specifically, a heating mechanism, such as the ventilation fan 8, the IR heater 3, the platen heater, and the preheater 7 above the recording head 2 illustrated in FIG. 1 may be provided above or below the line head in the same manner. In addition, a heating heater 5 which is a post-heating mechanism illustrated in FIG. 1, a cooling fan 6, and the like may be provided.

A second aspect of the present disclosure will be described.

Some embodiments of the present disclosure will be described below. The embodiments described below describe an example of the present disclosure. The present disclosure is not limited to the following embodiments, and includes various modifications implemented without changing the gist of the present disclosure. Not all of the configurations described below are essential configurations of the present disclosure. 1. Ink Set

An ink set of the present embodiment is an ink set containing a metallic ink composition containing a metal pigment and a base ink composition, a surface tension of the metallic ink composition is lower than a surface tension of the base ink composition, and the metal pigment is a metal particle whose surface is treated.

### 1. 1. Metallic Ink Composition

The metallic ink composition contains the metal pigment.

### 1. 1. 1. Metal Pigment

The metal pigment is not limited as long as the metal pigment can form an image having a metallic gloss. The shape of the particles of the metal pigments is not particularly limited, and may be, for example, a flat-plate shape, a scaly shape, a spherical shape, a columnar shape, or the like. Above all, the metal pigment is more preferably a flat-plate particle or a scaly particle in terms of more efficiently expressing metallic gloss.

Here, the "flat-plate particle" or "scaly particle" refer to a particle having a substantially flat surface (XY plane) and having a substantially uniform thickness (Z). Since the flat-plate particle or scaly particle can be produced by, for example, crushing a metal vapor-deposited film, the flat-plate particle or scaly particle can be obtained as a metal particle having a substantially flat surface and a substantially uniform thickness. Therefore, a long diameter of the flat-plate particle or the scaly particle on the plane can be defined as X, a short diameter can be defined as Y, and the thickness can be defined as Z.

The material of the metal pigment can be various metals, such as aluminum, silver, gold, platinum, nickel, chromium, tin, zinc, indium, titanium, and copper, and alloys thereof, and from the viewpoint of cost and ensuring excellent metallic gloss, aluminum or an aluminum alloy is preferable. When an aluminum alloy is used, the metal element or non-metal element to be alloyed is not particularly limited, and examples thereof include silver, gold, platinum, nickel, chromium, tin, zinc, indium, titanium, and copper. At least one of these elemental metals or alloys thereof and mixtures thereof is preferably used.

The thickness of the metal or alloy layer of the metal pigment particles is preferably 2.0 nm or more and 150.0 nm or less, for example. The thickness is more preferably 5.0 nm or more and 120.0 nm or less, and even more preferably 5.0 nm or more and 90.0 nm or less. Within the above range, the reflectivity and brilliance are excellent, and the performance as a metal pigment is enhanced. By setting the thickness to preferably 100.0 nm or less, and more preferably 90.0 nm or less, an increase in apparent specific gravity can be suppressed and the dispersion stability of the metal pigment can be further improved. In addition, the average thickness of the metal pigment may be in the above range. The average thickness is measured as follows, for example. An ink containing a metal pigment is diluted, a diluted solution is coated to a base material and dried, and the thickness of the dried metal pigment is measured by AFM. The measurement is performed at 50 random points to obtain the average value.

The volume average particle diameter D50 of the metal pigment particles is not particularly limited, and is preferably 0.05 µm or more and 3.00 µm or less, more preferably 0.10 µm or more and 1.50 µm or less, and even more preferably 0.20 µm or more and 1.00 µm or less. The volume average particle diameter D50 refers to the median diameter D50 of the volume distribution measured by using the laser diffraction/scattering method for the particle dispersion liquid. When the volume average particle diameter is the above range or more, the reflectivity and brilliance of the recorded material are more excellent, and when the volume average particle diameter is the above range or less, the dispersion stability and ejection property are more excellent, which is preferable.

For example, as a method of manufacturing a metal pigment, there is a method of peeling from a sheet-like base material at the interface between the metal or alloy layer of a composite pigment base material and the peeling resin layer, which include a structure in which a peeling resin layer and a metal or alloy layer are sequentially laminated on a sheet-like base material surface, as a boundary, pulverizing the mixture, and micronizing the mixture to obtain flat-plate particles. The metal or alloy layer is preferably formed by vacuum vapor deposition, ion plating or sputtering.

The peeling resin layer in the composite pigment base material is an undercoat layer of a metal or alloy layer, and is a peelable layer for improving the peelability from the sheet-like base material surface. As the resin used for the peeling resin layer, for example, polyvinyl alcohol, polyvinyl butyral, polyethylene glycol, polyacrylic acid, polyacrylamide, cellulose derivative, polyvinyl butyral, acrylic acid polymer or modified nylon resin is preferable.

The coating of the peeling resin layer is formed by a commonly used gravure coating, roll coating, blade coating, extrusion coating, dip coating, spin coating method or the like. After coating and drying, if necessary, the surface is smoothed by a calender treatment.

The sheet-like base material is not particularly limited, and examples thereof include a polyester film, such as polytetrafluoroethylene, polyethylene, polypropylene, and polyethylene terephthalate, a polyamide film, such as 66 nylon and 6 nylon, and a releasable film, such as polycarbonate film, triacetate film, and polyimide film. A preferred sheet-like base material is polyethylene terephthalate or a copolymer thereof.

The metal or alloy layer may be interposed between protective layers as exemplified in JP-A-2005-68250. Examples of the protective layer include a metal/alloy layer, a metal oxide layer, and an organic film layer. The metal/alloy layer is a layer of a metal (including a semimetal) or an alloy made of a material different from the metal or the alloy of a pigment base material. The metal oxide layer is a layer of an oxide of a metal (including a semimetal), and may be a film obtained by naturally oxidizing a metal or alloy of the pigment base material. For example, examples thereof include an alumina layer, a silicon oxide layer, and the like. In addition, the metal oxide layer may also be a ceramic layer. Examples of the organic film layer include a resin layer, and the organic film layer may be a resin layer in which the peeling resin layer remains as a protective resin layer, or may be a resin layer different from the peeling resin.

The silicon oxide layer as an example of the metal oxide layer is not particularly limited as long as the silicon oxide layer is a layer containing silicon oxide, and is preferably formed from a silicon alkoxide, such as tetra alkoxysilane or a polymer thereof, by a sol-gel method. For example, the silicon oxide layer can be formed by coating an alcohol solution in which silicon alkoxide or a polymer thereof is dissolved and heating and firing.

Furthermore, when the metal oxide film layer is formed, for example, the metal oxide film layer can be formed by coating an alcohol solution in which a metal alkoxide or a polymer thereof is dissolved and heating and firing.

A peeling treatment method from the sheet-like base material is not particularly limited, and a method performed by immersing the composite pigment base material in a liquid or a method in which ultrasonic treatment is performed at the same time as immersion in a liquid, and peeling treatment and pulverizing treatment of the peeled composite pigment are performed is preferable.

In the flat-plate metal pigment obtained as described above, the peeling resin layer has a role of a protective colloid, and a stable dispersion liquid can be obtained only by performing a dispersion treatment in a solvent.

When the metallic ink composition is an aqueous composition, it is more preferably that the metal pigment is surface-treated so that the metal is unlikely to react with water or oxygen. Even when the metallic ink composition is a solvent-based composition, it is more preferable that the surface treatment is performed so that the metal is unlikely to react with oxygen or water.

The ink is preferably a solvent ink containing a solvent component that dissolves or disperses a solid component contained in the ink.

Here, the "water-based ink" refers to an ink containing at least water as the main component of the solvent constituting the ink among the solvent inks. Examples of the solvent include water and organic solvents. The water-based ink contains 20% by mass or more of water based on the total mass of the ink. The water content is more preferably 40% by mass or more, even more preferably 50% by mass or more, and particularly preferably 60% by mass or more.

In addition, the "solvent-based ink" refers to an ink in which the main component of the solvent constituting the ink is an organic solvent among the solvent inks. The solvent-based ink contains less than 20% by mass (does not contain more than 20% by mass) of water based on the total mass of the ink. Furthermore, the content of water is preferably 10% by mass or less, preferably 1% by mass or less, and preferably 0.1% by mass or less. In addition, the content of the organic solvent is preferably 10% by mass or more, preferably 40% by mass or more, preferably 50% by mass or more, more preferably 60% by mass or more, and particularly preferably 80% by mass based on the total mass of the ink.

The metallic ink composition may be UV ink (ink cured by irradiation with ultraviolet rays or the like and used for recording).

When the metal pigment is surface-treated, it is more preferable that the metal pigment is surface-treated with a phosphorus-based compound or a silicon-based compound. In this manner, since the metallic gloss on the surface of the particles of the metal pigment is better maintained, for example, the storage stability of the metallic ink composition can be improved, or the gloss can be maintained for a long time when the image is stored. When the surface treatment is applied, mother particles may or may not have the above-described protective layer.

Examples of specific methods of surface treatment include a method in which at least one of a phosphorus-based compound, a silicon-based compound, and a fluorine-based compound is allowed to act on the metal pigment particles (mother particles). Examples of the method for allowing these compounds to act include heating and stirring.

As the phosphorus-based compound, for example, a phosphoric acid derivative, a phosphonic acid derivative, a phosphinic acid derivative and the like can be used. Examples of the derivative include a tautomer, an esterified product, an etherified product, a derivative in which a hydrogen atom in the structural formula is substituted with an organic substituent, and the like. In addition, the phosphorus-based compound preferably has a hydrophobic atom or atomic group, such as an alkyl group or a fluoroalkyl group.

Examples of the hydrophobic atom or atomic group include a fluorine atom, an alkyl group having 3 or more carbon atoms, and an alkyl group in which at least some of hydrogen atoms are substituted with fluorine atoms. The number of carbon atoms of the alkyl group or the alkyl group in which at least some of the hydrogen atoms are substituted with fluorine atoms is preferably 3 or more, more preferably 5 or more, and even more preferably 8 or more. In addition, the number of carbon atoms is not particularly limited, and is preferably 35 or less, more preferably 30 or less, and even more preferably 25 or less. The alkyl group or the alkyl group in which at least some of hydrogen atoms are substituted with fluorine atoms is preferably one bonded to a phosphorus atom of a phosphorus-based compound or one in which a hydroxyl group bonded to a phosphorus atom of a phosphorus-based compound is etherified.

Above all, the phosphorus-based compound is more preferably a fluorine-based phosphorus-based compound which is a phosphorus compound having at least one fluorine atom in the molecule. As a result, the hydrophobicity of the metal pigment particles in a state of being adhered to the particles can be further enhanced, and the dispersion stability of the metal pigment particles in the metallic ink composition can be further improved. In particular, in a recorded material produced by using an ink jet recording method, the particles of the metal pigment can be suitably arranged near the outer surface of the recording portion, and it is possible to more effectively exhibit the characteristics such as glossiness inherent in the metal material constituting the particles of the metal pigment.

When the phosphorus-based compound is a fluorine-based phosphorus-based compound, the fluorine-based phosphorus-based compound preferably has a perfluoroalkyl structure. The fluorine-based phosphorus-based compound is a compound having a phosphorus-containing group and a fluorine-containing group. Examples of the fluorine-containing group include a perfluoroalkyl structure. Examples of the phosphorus-containing group include a phosphoric acid group, a phosphorous acid group, a phosphonic acid group, a phosphinic acid group and the like.

More specifically, examples of the fluorine-based phosphorus-based compound include a compound represented by the general formula P(O)Rₙ(OH)₃₋ₙ. n is an integer of 1 to 3. R is a perfluoroalkyl group (perfluoroalkyl structure). Examples thereof include 2-(perfluorohexyl) ethyl phosphonic acid and the like.

The metallic ink composition may contain a plurality of types of compounds as the phosphorus-based compound. In such a case, the same metal particles may be surface-treated with a plurality of types of phosphorus-based compounds. In addition, the metallic ink composition may contain a compound surface-treated with different phosphorus-based compounds as the metal particles.

In addition, for example, when the metal film formed by the vapor phase film forming method is pulverized in the liquid to form the metal pigment particles, the surface treatment of the metal pigment particles with the phosphorus-based compound may be performed by containing a phosphorus-based compound in the liquid.

When the same particles are surface-treated with a plurality of types of phosphorus-based compounds, the surface treatment may be divided into a plurality of steps corresponding to each phosphorus-based compound, or the surface treatment may be performed with a plurality of types of phosphorus-based compounds in the same step.

When a phosphorus-based compound is used, the content is 0.01% by mass or more, preferably 0.1% by mass or more, more preferably 0.2% by mass or more, and even more preferably 0.25% by mass or more with respect to 100% by mass of the metal pigment. In addition, when a phosphorus-based compound is used, the upper limit of the content is, for example, 50% by mass or less, preferably 40% by mass or less, more preferably 30% by mass or less, and even more preferably 20% by mass or less with respect to 100% by mass of the metal pigment. When the content of the phosphorus-based compound is in this range, the glossiness of the image formed by the metallic ink composition can be made excellent and the gloss can be maintained for a long time.

Examples of silicon-based compounds include tetramethoxysilane, tetraethoxysilane, tetrapropoxysilane, tetrabutoxysilane, tetraphenoxysilane, methyltrimethoxysilane, methyltriethoxysilane, ethyltrimethoxysilane, ethyltriethoxysilane, trimethoxyphenylsilane, triethoxyphenylsilane, vinyltrimethoxysilane, vinyltriethoxysilane, 2-(3,4-epoxycyclohexyl) ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methoxyloxypropylmethyldiethoxysilane, 3-methacryloxypropyltriethoxysilane, 3-acryloxypropyltrimethoxysilane, and the like.

In addition, a silicon-containing fluorine compound may be used as a silicon-based compound. The silicon-containing fluorine compound is a compound having a silicon-containing group and a fluorine-containing group. Examples of the fluorine-containing group include a perfluoroalkyl structure. Examples of the silicon-containing group include an alkoxysilyl group. When a silicon-containing fluorine compound is used, a metal pigment having further excellent glossiness and dispersibility can be easily obtained, and the weather resistance tends to be improved when an image is recorded.

The silicon-containing fluorine compound is not particularly limited as, for example, a fluorine-containing compound having a perfluoroalkyl structure, and examples thereof include CF₃-CH₂CH₂-Si(OCH₃)₃, CF₃(CF₂)₃-CH₂CH₂-Si(OCH₃)₃, CF₃(CF₂)₅-CH₂CH₂-Si(OCH₃)₃, CF₃(CF₂)₅-CH₂CH₂-Si(OC₂H₅)₃, CF₃(CF₂)₇-CH₂CH₂-Si(OCH₃)₃, CF₃(CF₂)₁₁-CH₂CH₂-Si(OC₂H₅)₃, CF₃(CF₂)₃-CH₂CH₂-Si(CH₃)(OCH₃)₂, CF₃(CF₂)₇-CH₂CH₂-Si(CH₃)(OCH₃)₂, CF₃(CF₂)₈-CH₂CH₂-Si(CH₃)(OC₂H₅)₂, CF₃(CF₂)₈-CH₂CH₂-Si(C₂H₅)(OC₂H₅)₂ and 1H, 1H, 2H, 2H-perfluorodecyl triethoxysilane.

In addition, as the above-described perfluoroalkyl structure, a perfluoroalkyl ether structure (CₙF₂ₙ₊₁O) can also be used. Therefore, a fluorine compound having a perfluoroalkyl ether structure can also be used. The fluorine-containing silicon-based compound having a perfluoroalkyl ether structure is not particularly limited, and examples thereof include CF₃O(CF₂O)₆-CH₂CH₂-Si(OC₂H₅)₃, CF₃O(C₃F₆O)₄-CH₂CH₂-Si(OCH₃)₃, CF₃O(C₃F₆O)₂(CF₂O)₃-CH₂CH₂-Si(OCH₃)₃, CF₃O(C₃F₆O)₈-CH₂CH₂-Si(OCH₃)₃, CF₃O(C₄F₉O)₅-CH₂CH₂-Si(OCH₃)₃, CF₃O(C₄F₉O)₅-CH₂CH₂-Si(CH₃)(OC₂H₅)₂, and CF₃O(C₃F₆O)₄-CH₂CH₂-Si(C₂H₅)(OCH₃)₂.

When the metal pigment is surface-treated, a fluorine compound may be used. A fluorine-containing fatty acid may be used as the fluorine compound, and examples thereof include CF₃-CH₂CH₂-COOH, CF₃(CF₂)₃-CH₂CH₂-COOH, CF₃(CF₂)₅-CH₂CH₂-COOH, CF₃(CF₂)₆-CH₂CH₂-COOH, CF₃(CF₂)₇-CH₂CH₂-COOH, CF₃(CF₂)₉-CH₂CH₂-COOH, and an ester thereof.

Furthermore, as the fluorine compound, a fluorine-containing isocyanate compound may be used. As the fluorine-containing isocyanate compound, for example, a compound having a chemical structure represented by formula (1) below can be used.

R^{f}NCO ··· (1)

Here, in formula (1), R^{f} is CF₃(CF₂)ₘ- or CF₃(CF₂)ₘ(CH₂))ₗ-, m is an integer of 2 or more and 18 or less, and I is an integer of 1 or more and 18 or less.

By surface-treating the mother particles with such a phosphorus-based compound or a silicon-based compound, a film can be formed and an image having good gloss can be formed. 2 or more types from the phosphorus-based compound, the silicon-based compound, and the fluorine-based compound may be selected and the surface treatment may be performed.

The concentration of the metal pigment in the metallic ink composition is 0.1% by mass or more and 10.0% by mass or less, more preferably 0.5% by mass or more and 8.0% by mass or less, and even more preferably 1.0% by mass or more and 5.0% by mass or less.

### 1. 1. 2. Other Components

The metallic ink composition can contain the following components in addition to the metal pigment.

### Water

The metallic ink composition may be a water-based ink, a solvent-based ink, or may contain water. As the water, it is preferable to use pure water, such as ion-exchanged water, ultra-filtered water, reverse osmosis water, and distilled water, or ultrapure water. In particular, water obtained by sterilizing these waters by irradiating with ultraviolet rays or adding hydrogen peroxide is preferable because the water can suppress the growth of mold and bacteria for a long period of time.

### Organic Solvent

The metallic ink composition may contain an organic solvent. When the metallic ink composition is a solvent-based ink, the water content is preferably 1.0% by mass or less, more preferably 0.5% by mass or less, even more preferably 0.1% by mass or less, and particularly preferably not containing water. The organic solvent is not particularly limited, and examples thereof include glycol ether-based solvents. Examples of the glycol ether-based solvent include compounds represented by the following general formula (2)

R¹O-(R²O)ₘ-R³ ··· (2)

(in formula (2), R¹ is a hydrogen atom or an alkyl group having 1 or more carbon atoms and 6 or less carbon atoms, R² is an alkylene group having 2 or more carbon atoms and 4 or less carbon atoms, and R³ is a hydrogen atom, an acetyl group, or an alkyl group having 1 or more carbon atoms and 6 or less carbon atoms. However, at least one of R¹ and R³ is an alkyl group having 1 or more carbon atoms and 6 or less carbon atoms. m is an integer of 1 or more and 7 or less).

Specific examples of the compound represented by the above general formula (2) include Glycol monoethers, such as methyl glycol (ethylene glycol monomethyl ether: EGMME), methyl diglycol (diethylene glycol monomethyl ether: DEGMME), methyl triglycol (triethylene glycol monomethyl ether: TEGMME), isopropyl glycol (ethylene glycol monoisopropyl ether: EGMiPE), isopropyl diglycol (diethylene glycol monoisopropyl ether: DEGMiPE), butyl glycol (ethylene glycol monobutyl ether: EGMBE), butyl diglycol (diethylene glycol monobutyl ether: DEGMBE), butyl triglycol (triethylene glycol monobutyl ether: TEGMBE), isobutyl glycol (ethylene glycol monoisobutyl ether: EGMiBE), isobutyl diglycol (diethylene glycol monoisobutyl ether: DEGMiBE), hexyl glycol (ethylene glycol monohexyl ether: EGMHE), hexyl diglycol (diethylene glycol monohexyl ether: DEGMHE), methyl propylene glycol (propylene glycol monomethyl ether: PGMME), methylpropylene diglycol (dipropylene glycol monomethyl ether: DPGMME), methylpropylene triglycol (tripropylene glycol monomethyl ether: TPGMME), propylpropylene glycol (propylene glycol monopropyl ether: PGMPE), propylpropylene diglycol (dipropylene glycol monopropyl ether: DPGMPE), butyl propylene glycol (propylene glycol monobutyl ether: PGMBE), butyl propylene diglycol (dipropylene glycol monobutyl ether: DPGMBE) and butyl propylene triglycol (tripropylene glycol monobutyl ether: TPGMBE), and glycol diethers, such as dimethyl glycol (ethylene glycol dimethyl ether: EGDME), dimethyl diglycol (diethylene glycol dimethyl ether: DEGDME), dimethyl triglycol (triethylene glycol dimethyl ether: TEGDME), methyl ethyl diglycol (diethylene glycol ethyl methyl ether: DEGEME), diethyl diglycol (diethylene glycol diethyl ether: DEGDEE), dibutyl diglycol (diethylene glycol dibutyl ether: DEGDBE), and dimethylpropylene diglycol (dipropylene glycol dimethyl ether: DPGDME).

In addition, in the above formula (2), those in which R² or R³, particularly R³ is a hydrogen atom or an alkyl group having 1 or more and 4 or less carbon atoms, are particularly preferable in that printing unevenness, gloss, and dot size are further excellent. In addition, from the viewpoint of dryness and glossiness of the printed matter, it is preferable that both R¹ and R³ in the general formula (2) are glycol diethers which are alkyl groups. On the other hand, a glycol monoether, one of which is hydrogen and the other of which is an alkyl group, is preferable in that the ink is excellent in the wet spreading. From the viewpoint of dryness and print stability of the printed matter, it is preferable that R² in the general formula (2) has 2 or 3 carbon atoms and ethylene glycol (mono or di) ether has 2 carbon atoms.

The metallic ink composition also preferably contains alkylene glycol ether esters which are one type of glycol ether-based solvent.

Examples of alkylene glycol ether esters include glycol monoacetates, such as ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, dipropylene glycol monomethyl ether acetate, and methoxy butyl acetate, and glycol diesters, such as ethylene glycol diacetate, diethylene glycol diacetate, propylene glycol diacetate, dipropylene glycol diacetate, ethylene glycol acetate propionate, ethylene glycol acetate butyrate, diethylene glycol acetate butyrate, diethylene glycol acetate propionate, diethylene glycol acetate butyrate, propylene glycol acetate propionate, propylene glycol acetate butyrate, dipropylene glycol acetate butyrate, and dipropylene glycol acetate propionate.

The metallic ink composition also preferably contains a lactone. By containing the cyclic lactone, apart of the low absorption recording medium (for example, vinyl chloride resin) can be dissolved and the ink composition can be permeated into the recording medium. By permeating the ink composition into the recording medium in this manner, the abrasion resistance of the image recorded on the recording medium can be improved.

The term "lactone" is a general term for cyclic compounds having an ester group (-CO-O-) in the ring. The lactone is not particularly limited as long as it is included in the above definition, and is preferably a lactone having 2 or more and 9 or less carbon atoms. Specific examples of such lactones include α-ethyl lactone, α-acetolactone, β-propiolactone, γ-butyrolactone, δ-valerolactone, ε-caprolactone, ζ-enantiolactone, η-caprilolactone, γ-valerolactone, γ-heptalactone, γ-nonalactone, β-methyl-δ-valerolactone, 2-butyl-2-ethylpropiolactone, α, α-diethylpropiolactone, and the like. Of these, γ-butyrolactone is particularly preferable. The above-exemplified lactones may be used alone or in mixture of two or more types.

The metallic ink composition may further contain solvents, such as esters, ketones, alcohols, amides, alkanediols, and pyrrolidones, other than the compounds exemplified above as other solvents.

The total content of the organic solvent in the metallic ink composition is preferably 70.0% by mass or more, more preferably 80.0% by mass or more, even more preferably 90.0% by mass or more, and particularly preferably 95.0% by mass or more, and the upper limit is preferably 99.5% by mass or less, and more preferably 99.0% by mass or less, when the total mass of the composition is 100.0% by mass.

### Surfactant

The metallic ink composition may contain a silicone-based surfactant, a fluorine-based surfactant, or a polyoxyethylene derivative which is a nonionic surfactant, from the viewpoint of reducing the surface tension and improving the wettability with the recording medium.

As the silicone-based surfactant, it is preferable to use a polyester-modified silicone, a polyether-modified silicone, or a silicon-acrylic copolymer system. Specific examples thereof include BYK-315, 315N, 325, 333, 347, 348, BYK-UV3500, 3510, 3530, 3550, and 3570 (all manufactured by Big Chemie Japan Co., Ltd.).

As the fluorine-based surfactant, it is preferable to use a fluorine-modified oligomer, and specific examples thereof include BYK-340 (manufactured by Big Chemie Japan Co., Ltd.), MEGAFACE series (manufactured by DIC Corporation), such as MEGAFACE F-251, 430, 477, 552, 553, 554, 556, 557, 559, 562, 563, and 565, and MEGAFACE R-40, SURFLON series (manufactured by AGC Seichemical Co., Ltd.), such as SURFLON S-242, 243, 386, 420, 431, 611, 647, 651, 656, 658, and 693, FTERGENT series (manufactured by Neos Co., Ltd.), such as FTERGENT 251, 208M, 212M, 215M, 250, 209F, 222F, 245F, 208G, 218GL, 240G, 212P, 220P, 228P, 710FL, FTX-218, and DFX-18.

In addition, as the polyoxyethylene derivative, it is preferable to use an acetylene glycol-based surfactant. Specific examples thereof include SURFYNOL 82, 104, 465, 485, TG (all manufactured by Air Products Japan Co., Ltd.), OLFIN STG, E1010 (all manufactured by Nissin Chemical Industry Co., Ltd.), NISSAN NONION A-10R, A-13R (all manufactured by NOF CORPORATION), FLOWLEN TG-740W, D-90 (manufactured by Kyoeisha Chemical Co., Ltd.), NOIGEN CX-100 (manufactured by Daiichi Kogyo Seiyaku Co., Ltd.), and the like.

As the surfactant, an acetylene glycol-based surfactant or a polysiloxane-based surfactant may be contained. The acetylene glycol-based surfactant and the polysiloxane-based surfactant can enhance the wettability to the surface to be recorded such as a recording medium and enhance the penetrability of the ink. Examples of the acetylene glycol-based surfactant include 2,4,7,9-tetramethyl-5-decyne-4,7-diol, 3,6-dimethyl-4-octyne-3,6-diol, 3, 5-dimethyl-1-hexyn-3-ol, and 2,4-dimethyl-5-hexyn-3-ol. In addition, commercially available products can also be used as the acetylene glycol-based surfactant, and examples thereof include OLFIN E1010, STG, Y (all manufactured by Nissin Chemical Industry Co., Ltd.), and SURFYNOL 104, 82, 465, 485, TG (all manufactured by Air Products and Chemicals Inc.). As the polysiloxane-based surfactant, a commercially available product can be used, and examples thereof include BYK-347 and BYK-348 (all manufactured by Big Chemie Japan Co., Ltd.). Furthermore, the metallic ink composition may also contain other surfactants, such as anionic surfactants, nonionic surfactants, and amphoteric surfactants.

In addition, as the surfactant, it is preferable to contain an acetylene glycol-based surfactant or a polysiloxane-based surfactant. The acetylene glycol-based surfactant and the polysiloxane-based surfactant can enhance the wettability to the coated object and enhance the permeability. Examples of the acetylene glycol-based surfactant include 2,4,7,9-tetramethyl-5-decyne-4,7-diol, 3,6-dimethyl-4-octyne-3,6-diol, 3, 5-dimethyl-1-hexyn-3-ol, and 2,4-dimethyl-5-hexyn-3-ol. In addition, commercially available products can also be used as the acetylene glycol-based surfactant, and examples thereof include OLFIN E1010, STG, Y (all manufactured by Nissin Chemical Industry Co., Ltd.), and SURFYNOL 104, 82, 465, 485, TG (all manufactured by Air Products and Chemicals Inc.). As the polysiloxane-based surfactant, a commercially available product can be used, and examples thereof include BYK-347 and BYK-348 (all manufactured by Big Chemie Japan Co., Ltd.). Furthermore, other surfactants, such as anionic surfactants, nonionic surfactants and amphoteric surfactants, can be added. Examples of such a surfactant include DISPERBYK 102 (manufactured by Big Chemie Co., Ltd.), DISPARLON DA-325 (manufactured by Kusumoto Kasei Co., Ltd.), and the like.

When the surfactant is used in the metallic ink composition, the content of the surfactant in the composition is preferably 0.05% by mass or more and 3% by mass or less, and more preferably 0.5% by mass or more and 2% by mass or less.

### Resin

The metallic ink composition may contain a resin for fixing the above-described metal pigment on the recording medium (hereinafter, also referred to as "fixing resin").

Examples of the fixing resin include fiber-based resins, such as acrylic resin, rosin-modified resin, phenol resin, terpene-based resin, polyester resin, polyamide resin, epoxy resin, vinyl acetate resin, vinyl chloride resin, and cellulose acetate butyrate, vinyl toluene-α-methylstyrene copolymer resin, and the like. Among these, at least one resin selected from the group consisting of acrylic resin and vinyl chloride resin is preferable. By containing these fixing resins, the fixability to the recording medium can be improved, and the abrasion resistance is also improved.

The solid content of the fixing resin in the metallic ink composition is preferably 0.05% by mass or more and 15% by mass or less, and more preferably 0.1% by mass or more and 10% by mass or less. When the content of the fixing resin is in the above range, excellent fixability can be obtained for a low absorption recording medium.

As the acrylic resin, a copolymer made of a known polymerizable monomer in the related art can be used. For example, in addition to acrylic acid esters, such as methyl acrylate, ethyl acrylate, isopropyl acrylate, n-butyl acrylate, and 2-ethylhexyl acrylate; methacrylic acid esters, such as methyl methacrylic acid, ethyl methacrylic acid, isopropyl methacrylic acid, n-butyl methacrylic acid, isobutyl methacrylic acid, t-butyl methacrylic acid, cyclohexyl methacrylic acid, and 2-ethylhexyl methacrylic acid; a carboxy group-containing monomer, such as acrylic acid, methacrylic acid, maleic acid, fumaric acid, itaconic acid, mono n-butyl maleate, mono n-butyl fumaric acid, and mono n-butyl itaconic acid, as the polymerizable monomer, hydroxyl group-containing (meth) acrylic acid esters, amide group-containing monomers, glycidyl group-containing monomers, cyano group-containing monomers, hydroxyl group-containing allyl compounds, tertiary amino group-containing monomers, alkoxysilyl group-containing monomer and the like can be used alone or in combination of two or more. The acrylic resin may be a copolymer of an acrylic monomer and another monomer, and may be, for example, a styrene acrylic resin. It is preferably an acrylic resin using 90% by mass or more of an acrylic monomer, more preferably 95% by mass or more, and still more preferably 99% by mass or more.

As the above-described acrylic resin, a commercially available product may be used, and examples thereof include ACRYPET MF (trade name, manufactured by Mitsubishi Rayon Co., Ltd., acrylic resin), SUMIPEX LG (trade name, manufactured by Sumitomo Chemical Co., Ltd., acrylic resin), PARALOID B series (trade name, manufactured by Rohm and Haas, acrylic resin), PARAPET G-1000P (trade name, manufactured by Kuraray Co., Ltd., acrylic resin), UC-3000 (trade name, manufactured by Toa Synthetic Co., Ltd., acrylic resin), and the like. The acrylic monomer contains a (meth) acrylic monomer, for example, (meth) acrylic acid means one or both of acrylic acid and methacrylic acid, and (meth) acrylate means one or both of acrylate and methacrylate.

When the metallic ink composition contains an acrylic-based resin, an image having better fixability can be formed.

Examples of the vinyl chloride resin include copolymers of vinyl chloride and other monomers, such as vinyl acetate, vinylidene chloride, acrylic acid, maleic acid, and vinyl alcohol. Among these, a copolymer containing a structural unit derived from vinyl chloride and vinyl acetate (hereinafter, also referred to as " vinyl chloride acetate copolymer") is preferable, and a vinyl chloride acetate copolymer having a glass transition temperature of 60°C to 80°C is more preferable.

The vinyl chloride acetate copolymer can be obtained by a method in the related art, for example, by suspension polymerization. Specifically, water, a dispersant, and a polymerization initiator are charged in a polymerizer, degassed, and then vinyl chloride and vinyl acetate can be press-fitted to perform suspension polymerization, or a part of vinyl chloride and vinyl acetate can be press-fitted to start the reaction, and the remaining vinyl chloride can be press-fitted during the reaction to perform suspension polymerization.

The vinyl chloride acetate copolymer preferably contains 70% to 90% by mass of vinyl chloride units as the structure. Within the above range, the vinyl acetate copolymer is stably dissolved in the ink composition, so excellent in long-term storage stability is obtained. Furthermore, the ejection stability is excellent, and excellent fixability to the recording medium can be obtained.

In addition, the vinyl chloride acetate copolymer may include a vinyl chloride unit and a vinyl acetate unit as well as other structural units, if necessary, examples thereof include a carboxylic acid unit, a vinyl alcohol unit, and a hydroxyalkyl acrylate unit, and vinyl alcohol units are particularly preferable. It can be obtained by using the monomer corresponding to each of the above-described units. Specific examples of the monomer giving the carboxylic acid unit include maleic acid, itaconic acid, maleic anhydride, itaconic anhydride, acrylic acid, and methacrylic acid. Specific examples of the monomer giving the hydroxyalkyl acrylate unit include hydroxyethyl (meth) acrylate, hydroxyethyl vinyl ether, and the like. The content of these monomers is not limited as long as the effects of the present disclosure are not impaired, and for example, copolymerization can be performed in the range of 15% by mass or less of the total amount of the monomers.

In addition, commercially available vinyl chloride acetate copolymers may be used, and examples thereof include SOLVINE CN, SOLVINE CNL, SOLVINE C5R, SOLVINE TA5R, SOLVINE CL, SOLVINE CLL (all manufactured by Nisshin Chemical Industry Co., Ltd.), and the like.

The average degree of polymerization of these resins is not particularly limited, and is preferably 150 to 1100, and more preferably 200 to 750. When the average degree of polymerization of these resins is in the above range, these resins are stably dissolved in the metallic ink composition, so that excellent in long-term storage stability is obtained. Furthermore, the ejection stability is excellent, and excellent fixability to the recording medium can be obtained. The average degree of polymerization of these resins is calculated by measuring the specific viscosity, and can be obtained according to the method for calculating the average degree of polymerization described in "JIS K6720-2".

In addition, the number average molecular weight of these resins is not particularly limited, and is preferably 10,000 to 50,000, and more preferably 12,000 to 42,000. The number average molecular weight can be measured by GPC and can be obtained as a relative value in terms of polystyrene.

### Others

In addition to the above components, the metallic ink composition may contain a substance for imparting predetermined performance, such as a chelating agent, a preservative, a viscosity regulator, a solubilizing agent, an antioxidant, and a fungicide, if necessary.

The viscosity of the metallic ink composition at 20°C is preferably 2 mPa·s or more and 15 mPa·s or less. When the viscosity of the metallic ink composition at 20°C is within the above range, an appropriate amount of the metallic ink composition can be ejected from the nozzle, and flight bending or scattering of the metallic ink composition is further reduced, the metallic ink composition can be suitably used for an ink jet recording apparatus.

The metallic ink composition is obtained by mixing the above-described components in an appropriate order and, if necessary, filtering or the like to remove impurities. As a method of mixing each component, a method of adding materials to a container provided with a stirring device such as a mechanical stirrer or a magnetic stirrer and stirring and mixing these materials is suitably used.

### 1. 2. Base ink composition

The base ink composition may be a clear ink composition containing no coloring material or a colored ink composition containing a coloring material. When the base ink composition is a colored ink composition, the base ink composition may be colored in a chromatic color or in an achromatic color. Furthermore, the base ink composition may be a water-based ink composition or a solvent-based ink composition, and can be appropriately designed according to an image to be formed or the metallic ink composition.

The base ink composition may contain a coloring material, water, an organic solvent, a surfactant, a resin, and other components.

### (1) Coloring Material

When the base ink composition contains a coloring material, an image formed by the ink set can be colored as a colored metallic image. Examples of the coloring material include chromatic colors and coloring materials of a series of colors (achromatic colors) ranging from white through gray to black, and any of the coloring materials may be referred to as a "colored coloring material" in the present specification.

As the colored coloring material, either a pigment or a dye can be used, and the pigment is preferable from the viewpoint of storage stability such as light resistance, weather resistance, and gas resistance. Examples of the base ink composition include cyan ink, yellow ink, magenta ink, and black ink which are called process color ink, white ink called special color ink, orange ink, green ink, red ink, blue ink, and an aspect of ink having a low coloring material concentration, which is called a light ink or the like. When the base ink composition does not contain a coloring material, the base ink composition is a clear ink.

Examples of the coloring pigments include azo pigments, such as white pigment, insoluble azo pigment, condensed azo pigment, azo lake, and chelate azo pigment, polycyclic pigments, such as phthalocyanine pigment, perylene and perinone pigment, anthraquinone pigment, quinacridone pigment, dioxane pigment, thioindigo pigment, isoindolinone pigment, and quinophthalone pigment, dye chelate (for example, basic dye type chelate, acid dye type chelate), dyeing lake (basic dye type lake, acid dye type lake), nitro pigment, nitroso pigment, aniline black, daylight fluorescent pigment, and the like.

Examples of the white pigment include metal compounds, such as metal oxide, barium sulfate, and calcium carbonate. Examples of the metal oxide include titanium dioxide, zinc oxide, silica, alumina, magnesium oxide, and the like.

Specific examples of the coloring pigments include, C. I. Pigment Yellow 1 (Fast Yellow G), 2, 3, 12 (Disazo Yellow AAA), 13, 14, 16, 17, 24, 34, 35, 37, 42 (Yellow Iron Oxide), 53, 55, 73, 74, 75, 81, 83 (Disazo Yellow HR), 93, 94, 95, 97, 98, 100, 101, 104, 108, 109, 110, 117, 120, 128, 129, 138, 139, 150, 153, 154, 155, 180, 185, 213, C. I. Pigment Red 1, 2, 3, 5, 7, 17, 22 (Brilliant First Scarlet), 23, 31, 38, 48: 2 (Permanent Red 2B (Ba)), 48: 2 (Permanent Red 2B (Ca)), 48: 3 (Permanent Red 2B (Sr)), 48: 4 (Permanent Red 2B (Mn)), 49: 1, 52: 2, 53: 1, 57: 1 (Brilliant Carmine 6B), 60: 1, 63: 1, 63: 2, 64: 1, 81 (Rhodamine 6G Lake), 83, 88, 101 (Red iron oxide), 104, 105, 106, 112, 114, 122 (Quinacridone Magenta), 123, 146, 149, 166, 168, 170, 172, 177, 178, 179, 184, 185, 190, 193, 202, 209, 219, C. I. Pigment Violet 19, C. I. Pigment Blue 1, 2, 15 (Phthalocyanine Blue R), 15: 1, 15: 2, 15: 3 (Phthalocyanine Blue G), 15: 4, 15: 6 (Phthalocyanine Blue E), 16, 17: 1, 22, 56, 60, 63, C. I. Pigment Green 1, 4, 7, 8, 10, 17, 18, 36, and the like. Even pigments not listed in the Color Index can be used. In addition, the above pigments may be used alone or in combination of two or more types.

When a pigment is used as the colored coloring material in the base ink composition, it is preferable that the ink composition contains a dispersant for dispersing the pigment. As the dispersant, those that can be used for this type of pigment ink can be used without particular limitation, and examples thereof include a cationic dispersant, an anionic dispersant, a nonionic dispersant, and a surfactant.

Examples of anionic dispersants include polyacrylic acid, polymethacrylic acid, acrylic acid-acrylonitrile copolymer, vinyl acetate-acrylic acid ester copolymer, acrylic acid-acrylic acid-alkyl ester copolymer, styrene-acrylic acid copolymer, styrene-methacrylic acid copolymer, styrene-acrylic acid-acrylic acid alkyl ester copolymer, styrene-methacrylic acid-acrylic acid alkyl ester copolymer, styrene-α-methylstyrene-acrylic acid copolymer, styrene-α-methylstyrene-acrylic acid-acrylic acid alkyl ester copolymer, styrene-maleic acid copolymer, vinyl naphthalene-maleic acid copolymer, vinyl acetate-ethylene copolymer, vinyl acetate-fatty acid vinyl ethylene copolymer, vinyl acetate-maleic acid ester copolymer, vinyl acetate-crotonic acid copolymer, vinyl acetate-acrylic acid copolymer, and the like.

Examples of the nonionic dispersant include polyvinyl pyrrolidone, polypropylene glycol, vinyl pyrrolidone-vinyl acetate copolymer, and the like.

Examples of the surfactants as dispersants include anionic surfactants, such as sodium dodecylbenzene sulfonate, sodium lauryl sulfate, and ammonium salts of polyoxyethylene alkyl ether sulfate, nonionic surfactants, such as polyoxyethylene alkyl ether, polyoxyethylene alkyl ester, polyoxyethylene sorbitan fatty acid ester, polyoxyethylene alkyl phenyl ether, polyoxyethylene alkylamine, and polyoxyethylene alkylamide, and the like. In particular, from the viewpoint of enhancing the dispersion stability of the pigment, it is preferable to use a styrene- (meth) acrylic acid copolymer.

Dyes may be used as the coloring material, and examples of such dyes include acidic dyes, direct dyes, reactive dyes, and basic dyes as a water dissolution system, and dispersion dyes, oil-soluble dyes, and sublimation dyes as a water dispersion system.

The above-exemplified coloring materials are examples of suitable coloring materials, and the present disclosure is not limited thereto. One or two or more of these coloring materials may be used, or a pigment and a dye may be used in combination.

The base ink composition is more preferably a white ink composition containing a white pigment or a clear ink composition containing no coloring material. When the base ink composition is a white ink composition or a clear ink composition, a metallic glossy image with higher brightness may be obtained.

When a coloring material is used in the base ink composition, the content of the coloring material can be adjusted as appropriate, and is preferably 0.10% by mass or more and 20.0% by mass or less, more preferably 0.20% by mass or more and 15.0% by mass or less, and even more preferably 1.0% by mass or more and 10.0% by mass or less. Furthermore, the content is preferably 1.5% by mass or more and 5.0% by mass or less.

### (2) Water

The base ink composition may be a water-based ink, a solvent-based ink, or may contain water. As the water, it is preferable to use pure water, such as ion-exchanged water, ultra-filtered water, reverse osmosis water, and distilled water, or ultrapure water. In particular, water obtained by sterilizing these waters by irradiating with ultraviolet rays or adding hydrogen peroxide is preferable because the water can suppress the growth of mold and bacteria for a long period of time.

### (3) Organic Solvent

The base ink composition may contain an organic solvent. When the base ink composition is a solvent-based ink composition, the water content is preferably 1.0% by mass or less, more preferably 0.5% by mass or less, even more preferably 0.1% by mass or less, and particularly preferably not containing water. The organic solvent that can be used for the base ink composition is the same as that described in "(Organic solvent)" in the section of the metallic ink composition described above, and is described by replacing "metallic ink composition" in the same section with "base ink composition".

### (4) Surfactant

The base ink composition may contain a surfactant. The surfactant that can be used for the base ink composition is the same as that described in "(Surfactant)" in the section of the metallic ink composition described above, and is described by replacing "metallic ink composition" in the same section with "base ink composition".

### (5) Resin

The base ink composition may contain a resin. The resin that can be used for the base ink composition is the same as that described in "(Resin)" in the section of the metallic ink composition described above, and is described by replacing "metallic ink composition" in the same section with "base ink composition".

### (6) Other Components

The base ink composition may contain the components exemplified in "(Other components)" in the above-described metallic ink composition section. Since the components are the same as those described in "(Other components)", the components is described by replacing "metallic ink composition" in the same section with "base ink composition".

The base ink composition is obtained by mixing the above-described components in an appropriate order and, if necessary, filtering or the like to remove impurities. As a method of mixing each component, a method of adding materials to a container provided with a stirring device such as a mechanical stirrer or a magnetic stirrer and stirring and mixing these materials is suitably used.

The viscosity of the base ink composition at 20°C is preferably 2 mPa·s or more and 15 mPa·s or less. When the viscosity of the metallic ink composition at 20°C is within the above range, an appropriate amount of the metallic ink composition can be ejected from the nozzle, and flight bending or scattering of the metallic ink composition is further reduced, the metallic ink composition can be suitably used for an ink jet recording apparatus.

### 1. 3. Relationship of Surface Tension

In the ink set of the present embodiment, a surface tension of the metallic ink composition is set lower than a surface tension of the base ink composition. Therefore, the metallic ink composition is likely to be wet spreading on the base ink composition. As a result, leafing of the metal pigment contained in the metallic ink composition is likely to occur, and the metallic glossy surface of the metal pigment particles is likely to be fixed along the surface of the recording medium. As a result, an image having an excellent metallic glossiness is formed.

In the ink set, the surface tension of the metallic ink composition is more preferably lower by 0.5 mN/m or more, even more preferably lower by 1.0 mN/m or more, and even more preferably lower by 2.0 mN/m or more than the surface tension of the base ink composition, in terms of further improving the wet spreading of the metallic ink composition on the base ink composition. The difference between the surface tension of the metallic ink composition and the surface tension of the base ink composition is preferably 15.0 mN/m or less, more preferably 10.0 mN/m or less, and even more preferably 5.0 mN/m or less, in terms of preventing excessive wet spreading of the metallic ink composition on the base ink composition.

The surface tension of the metallic ink composition and the base ink composition can be adjusted by the type and content of components, such as a surfactant and a solvent. The surface tensions of both the metallic ink composition and the base ink composition are preferably 15.0 mN/m or more and 35.0 mN/m or less, more preferably 20.0 mN/m or more and 30.0 mN/m or less, and even more preferably 22.0 mN/m or more and 28.0 mN/m or less.

### 1. 4. Other Ink Compositions

The ink set of the present embodiment may include other ink compositions as long as the ink set contains the above-described metallic ink composition and base ink composition that satisfy the relationship of surface tension. The ink set may further include, for example, the base ink composition described above, regardless of surface tension. 1. 5. Applications of Ink Set

In the ink set of the present embodiment, the metallic ink composition and the base ink composition may be used as an ink jet ink, and may be used in an ink jet recording method. As a result, a high-definition metallic glossy image can be obtained more easily.

In addition, in the ink set of the present embodiment, both the metallic ink composition and the base ink composition may be solvent-based inks. In this manner, the relationship between the two surface tensions

### 1. 6. Effects

In the ink set of the present embodiment, the surface tension of the metallic ink composition is set lower than the surface tension of the base ink composition. Therefore, the metallic ink composition is likely to be wet spreading on the base ink composition. As a result, leafing of the metal pigment contained in the metallic ink composition is likely to occur, and the metallic glossy surface of the metal pigment particles is likely to be fixed along the surface of the recording medium. As a result, an image having an excellent metallic glossiness is formed.

Normally, when the metallic ink composition is wet and spreads, the contact area between the metallic glossy image and air increases. Since the metal pigment contained in the metallic ink composition of the ink set of the present embodiment is surface-treated, the metallic gloss of the image is likely to be maintained in good condition. Therefore, according to the ink set of the present embodiment, it is possible to obtain an image capable of maintaining a good metallic gloss for a long period of time.

### 2. Recording Method

The recording method according to the present embodiment is a recording method using the above-described ink set, and includes a step of adhering a base ink composition to a recording medium and a step of adhering a metallic ink composition to the adhered base ink composition.

According to the recording method, the metallic ink composition is likely to be wet and spread on the base ink composition, and the leafing of the metal pigment contained in the metallic ink composition is likely to occur. Moreover, since the surface of the metal pigment is treated, the metallic gloss is easily maintained well. As a result, it is possible to obtain an image that can maintain good gloss for a long period of time.

### 2. 1. Recording Medium

The recording medium used in the recording method of the present embodiment is not particularly limited, and for example, various recording media, such as a plain paper, an ink jet paper (matte paper, glossy paper), glass, a plastic film, such as vinyl chloride, a film coated with plastic or a receiving layer on the base material, metal, and a printed wiring substrate can be used. When the recording medium has an ink receiving layer, it is preferable to print the recording medium without heating from the viewpoint of being unlikely to cause heat damage. On the other hand, when the recording medium does not have an ink receiving layer, it is preferable to heat the recording medium for recording from the viewpoint of increasing the drying rate and obtaining high gloss.

### 2. 2. Base Ink Adhesion Step

The base ink composition is adhered to the recording medium. A method of adhering the base ink composition to the recording medium can be either of a non-contact or contact method, such as an ink jet method, a coating method, a method of applying the base ink composition to a recording medium using various sprays, a method of immersing a recording medium in a base ink composition and applying the base ink composition, and a method of applying the base ink composition to a recording medium with a brush or the like or can be a method in which these methods are combined.

When the base ink composition is adhered to the recording medium by the ink jet method, it is easy to efficiently form a predetermined image on the recording medium. In addition, in this manner, it is possible to efficiently perform printing of a large number of types in a small amount with a small device.

### 2. 3. Metallic Ink Adhesion Step

In the metallic ink adhesion step, the metallic ink composition is adhered to the base ink composition adhered to the recording medium. A method of adhering the metallic ink composition can be either of a non-contact or contact method, such as an ink jet method, a coating method, a method of applying the metallic ink composition to a recording medium using various sprays, a method of immersing a recording medium in a metallic ink composition and applying the metallic ink composition, and a method of applying the metallic ink composition to a recording medium with a brush or the like or can be a method in which these methods are combined.

When the metallic ink composition is adhered to the recording medium by the ink jet method, it is easy to efficiently form a predetermined image on the recording medium. In addition, in this manner, it is possible to efficiently perform printing of a large number of types in a small amount with a small device.

### 2. 4. Order of Steps

The base ink adhesion step is performed before the metallic ink adhesion step. In the ink set of the present embodiment, as described above, the surface tension of the metallic ink composition is smaller than the surface tension of the base ink composition. Therefore, when the base ink composition is adhered to a specific region of the recording medium and then the metallic ink composition is adhered to the region, the wet spreading of the metallic ink composition is improved. As a result, an image having excellent metallic gloss can be formed. In addition, as described above, since the surface of the metal pigment is treated, the metallic gloss is easily maintained well. As a result, it is possible to obtain an image that can maintain good gloss for a long period of time.

When each step is performed by the ink jet method, ink droplets (droplets) of the ink composition are adhered to the recording medium from the ink jet head of the printer. At this time, the ink droplets are intermittently ejected at a predetermined timing and at a predetermined mass to adhere the ink droplets to the recording medium, and designs such as a desired image, character, pattern, or color are formed (recording).

Adhesion of the ink composition by the ink jet method can be performed by a serial-type recording apparatus on which a serial-type ink jet head is mounted or by a line-type recording apparatus on which a line-type ink jet head is mounted.

### 2. 5. Other Steps

In addition to the metallic ink adhesion step and the colored ink adhesion step described above, the recording method of the present embodiment may include a primary drying step of adhering ink to a heated recording medium, a secondary drying step of heating the recording medium after the ink is adhered, a laminating step or the like, and these steps may be performed a plurality of times.

### 2. 6. Recording Apparatus

FIG. 2 is a schematic sectional view illustrating a configuration of an example of an ink jet recording apparatus that can be used in the recording method of the present disclosure. As illustrated in the figure, the ink jet recording apparatus 1 includes an ink jet head 2, an IR heater 3, a platen and a platen heater 4, a heating heater 5, a cooling fan 6, a preheater 7, and a blower fan 8. In the ink jet recording apparatus 1, the entire operation of the ink jet recording apparatus 1 is controlled by a control portion CONT (not illustrated). The example of the recording apparatus in the figure is an example of a line printer, and while the recording medium 10 is transported in the transport direction X, ink is ejected from the ink jet head 2 to perform recording. The platen heater 4, the preheater 7, the blower fan 8, the IR heater 3 and the like perform a primary drying, and the heating heater 5 performs a secondary drying. Example

Next, specific examples of the present disclosure will be described.

Examples of the first aspect of the present disclosure will be described.

### Example A1

First, a film made of polyethylene terephthalate having a surface roughness Ra of 0.02 µm or less and a smooth surface and a thickness of 20 µm was prepared.

Next, a release layer was formed by coating the entire one surface of the film with a release resin solubilized with acetone with a roll coater.

A polyethylene terephthalate film on which a release layer was formed was transported into a vacuum vapor deposition apparatus at a speed of 5 m/s, and a film having a thickness of 16 nm made of Al was formed under reduced pressure.

Next, a film made of polyethylene terephthalate on which an Al film was formed was immersed in tetrahydrofuran and ultrasonic vibration at 40 kHz was applied, so that a dispersion liquid of a metal pigment, which is an aggregate of metal particles made of Al was obtained.

Next, tetrahydrofuran was removed by a centrifuge, and diethylene glycol diethyl ether was added to obtain a suspension having the content of the metal pigments of 5% by mass.

Next, the suspension was treated with a circulation type high-power ultrasonic pulverizer to pulverize the metal particles until the metal particles reached a predetermined size. In this treatment, 20 kHz ultrasonic waves were applied.

Next, the suspension was heat-treated at 55°C for 2 hours under ultrasonic irradiation at 40 kHz to disaggregate the metal particles and disperse the metal particles in the state of primary particles. A specific surface treatment agent, which is a compound represented by the above formula (1), was added thereto at a ratio where the mass ratio to the metal particles became the value in Table 1. In this example, as the specific surface treatment agent, a mixture of a compound in which R is a tridecyl group and a of 1 and a compound in which a of 2 in the above formula (1) was used.

By performing a heat treatment at 55°C for 5 hours under 28 kHz ultrasonic irradiation, the specific surface treatment agent was reacted on the surface of the metal particles to obtain a dispersion liquid of the metal particles surface-modified with the specific surface treatment agent.

Thereafter, diethylene glycol diethyl ether, tetraethylene glycol monobutyl ether, γ-butyrolactone, and a resin were added to the obtained dispersion liquid of metal particles to obtain an ink jet ink composition A1 illustrated in Table 1. The ink jet ink composition A1 was a solvent-based composition.

The volume average particle diameter of the metal particles contained in the ink composition obtained in this manner was 0.40 µm, and the average thickness was 16 nm.

### Example A2 ^{~}

The metal pigment was configured as illustrated in Table 1, and a dispersion liquid of a metal pigment was prepared by replacing the surface treatment agent used in the preparation of the dispersion liquid of the metal pigment with those illustrated in Table 1. Ink compositions of A2 and later and Comparative Examples were produced in the same manner as in Example A1 except that the composition illustrated in Table 1 was obtained by changing the type and ratio of the raw materials contained using the obtained dispersion liquid of the metal pigment and the remaining components illustrated in Table 1. The average thickness of the metal particles was adjusted during the vapor deposition of Al. The average particle diameter of the metal particles was adjusted by adjusting the amount of pulverization during ultrasonic pulverization.

### Example B1

Using the dispersion liquid of the metal pigment obtained in the preparation of the dispersion liquid of the metal pigment in Example A1, diethylene glycol diethyl ether was substituted with water. In this manner, an aqueous dispersion liquid of a metal pigment containing 5% by mass of metal particles surface-modified with a specific surface treatment agent was obtained.

Water, 1,2 hexanediol, propylene glycol, and urethane resin (RESAMINE D1060 manufactured by Dainippon Seika Kogyo Co., Ltd.) were added to the obtained pigment dispersion liquid to obtain an ink composition of B1 illustrated in Table 2. The ink composition was a water-based ink.

The volume average particle diameter of the metal particles contained in the metal pigment composition obtained in this manner was 0.40 µm, and the average thickness was 16 nm.

### Example B2 ^{~}

The metal pigment was configured as illustrated in Table 2, and a dispersion liquid of a metal pigment was prepared by replacing the surface treatment agent used in the preparation of the dispersion liquid of the metal pigment with those illustrated in Table 2. Ink compositions of B2 and later and Comparative Examples were produced in the same manner as in Example B1 except that the composition illustrated in Table 2 was obtained by changing the type and ratio of the raw materials contained using the obtained dispersion liquid of the metal pigment and the remaining components illustrated in Table 2. The average thickness of the metal particles was adjusted during the vapor deposition of Al. The average particle diameter of the metal particles was adjusted by adjusting the amount of pulverization during ultrasonic pulverization.

The structure and composition of the metal pigment contained in the ink composition are summarized in Tables 1 and 2 for each of the Examples and Comparative Examples. Each component is described below. R carbon atoms of the treatment agent in the table indicates the number of carbon atoms of the carbon skeleton of R.

Tridecyl phosphoric acid: A surface treatment agent represented by the above formula (1) which is a mixture of a compound in which a is 1 and a compound in which a is 2, herein R in formula (1) is an n-tridecyl group.

Isotridecyl phosphoric acid: A surface treatment agent represented by the above formula (1) which is a mixture of a compound in which a is 1 and a compound in which a is 2, herein R in formula (1) is an isotridecyl group.

Cetyl phosphoric acid: A surface treatment agent represented by the above formula (1) which is a mixture of a compound in which a is 1 and a compound in which a is 2, herein R in formula (1) is an n-cetyl group.

Octadecyl phosphoric acid: A surface treatment agent represented by the above formula (1) which is a mixture of a compound in which a is 1 and a compound in which a is 2, herein R in formula (1) is an n-octadecyl group.

Octadecyl phosphonic acid: A surface treatment agent represented by the above formula (2), and a compound in which R in formula (2) is an n-octadecyl group.

Oleyl phosphoric acid: A surface treatment agent represented by the above formula (1) which is a mixture of a compound in which a is 1 and a compound in which a is 2, herein R in formula (1) is an n-oleyl group.

Tetracosyl phosphoric acid: A surface treatment agent represented by the above formula (1) which is a mixture of a compound in which a is 1 and a compound in which a is 2, herein R in formula (1) is an n-tetracosyl group.

Octyl phosphoric acid: A surface treatment agent represented by the above formula (1) which is a mixture of a compound in which a is 1 and a compound in which a is 2, herein R in formula (1) is an n-octyl group.

Dodecyl phosphoric acid: A surface treatment agent represented by the above formula (1) which is a mixture of a compound in which a is 1 and a compound in which a is 2, herein R in formula (1) is an n-dodecyl group.

Dodecyl phosphonic acid: A surface treatment agent represented by the above formula (2), and a compound in which R in formula (1) is an n-dodecyl group.

16-phosphnohexadecanoic acid: A surface treatment agent represented by the above formula (2), and a compound in which R in formula (1) is a 16-carboxy-n-hexadecyl group.

FHP: 2- (perfluorohexyl) ethylphosphonic acid. A surface treatment agent that is not a specific surface treatment agent.

ODTMS: Octadecyltrimethoxysilane. A surface treatment agent that is not a specific surface treatment agent.

PARALOID B60: Acrylic resin. Manufactured by Dow Chemical.

DEDG: Diethylene glycol diethyl ether.

BTGH: Tetraethylene glycol monobutyl ether.

yBL: γ-Butyrolactone.

D1060: Urethane resin. RESAMINE D1060 manufactured by Dainippon Seika Kogyo Co., Ltd.

1,2HD: 1,2-hexanediol.

PG: Propylene glycol.

P. B. 15: 3: Pigment Blue 15: 3.

In addition, colored inks illustrated in A18 in Table 1 and B9 in Table 2 were also prepared. In the preparation of the colored ink, a dispersion liquid in which the pigment was dispersed using a dispersant not listed in the table in advance was prepared, and the ink was prepared using the dispersion liquid. As the dispersant, a polyester polyamide resin was used for A18, an acrylic styrene resin was used for B9, and the mixture was mixed at a mass ratio of pigment: dispersant = 2: 1 and stirred well with a bead mill to prepare a pigment dispersion liquid. As a dispersion medium, was diethylene glycol diethyl ether was used for A18 and water was used for B9.

In the table, the unit of the content of each component is % by mass. Regarding the metal pigments constituting the ink composition of the previous example, the volume average particle diameter D (D50) in the table was measured using MICROTRAC MT-3300 (laser diffraction/scattering type particle diameter distribution measuring device manufactured by Microtrac BEL Corp.). The average thickness T was measured by atomic force microscopy using NanoNavi E-Sweep (manufactured by Sll Nanotechnology Inc.).

In addition, the viscosities of the ink compositions of each example measured in accordance with JIS Z8809 using a rotary viscometer at 25°C were all in the range of 1.5 mPa·s or more and 15 mPa·s or less.

**Table 1**

| Examples of ink | | R carbon atoms of treatment agent | Examples | | | | | | | | | | | | Comparative Examples | | | | | Other |
|---|---|---|---|---|---|---|---|---|---|---|---|---|---|---|---|---|---|---|---|---|
| | | | A1 | A2 | A3 | A4 | A5 | A6 | A7 | A8 | A9 | A10 | A11 | A12 | A13 | A14 | A15 | A16 | A17 | A18 |
| Pigment (AL) | T:16nm D:0.4µm | - | 1.6 | - | - | 1.6 | 1.6 | 1.6 | 1.6 | 1.6 | 1.6 | 1.6 | 1.6 | 1.6 | 1.6 | 1.6 | 1.6 | 1.6 | 1.6 | - |
| | T:25nm D:0.4pm | - | - | 1.6 | - | - | - | - | - | - | - | - | - | - | - | - | - | - | - | - |
| | T:16nm D:0.9µm | - | - | - | 1.6 | - | - | - | - | - | - | - | - | - | - | - | - | - | - | - |
| Pigment | P.B.15:3 | - | - | - | - | - | - | - | - | - | - | - | - | - | - | - | - | - | - | 1.6 |
| | Tridecyl phosphoric acid | 13 | 0.16 | 0.16 | 0.16 | - | - | - | - | - | - | - | 0.02 | 0.8 | - | - | - | - | - | - |
| | Isotridecyl phosphoric acid | 13 | - | - | - | 0.16 | - | - | - | - | - | - | - | - | - | - | - | - | - | - |
| | Cetyl phosphoric acid | 16 | - | - | - | - | 0.16 | - | - | - | - | - | - | - | - | - | - | - | - | - |
| | Octadecyl phosphoric acid | 18 | - | - | - | - | - | 0.16 | - | - | - | 0.08 | - | - | - | - | - | - | - | - |
| Specific treatment agent | Octadecyl phosphonic acid | 18 | - | - | - | - | - | - | 0.16 | - | - | 0.08 | - | - | - | - | - | - | - | - |
| | Oleyl phosphoric acid | 18 | - | - | - | - | - | - | - | 0.16 | - | - | - | - | - | - | - | - | - | - |
| | Tetracosyl phosphoric acid | 24 | - | - | - | - | - | - | - | - | 0.16 | - | - | - | - | - | - | - | - | - |
| Other treatment agent | Octyl phosphoric acid | 8 | - | - | - | - | - | - | - | - | - | - | - | - | 0.16 | - | - | - | - | - |
| | Dodecyl phosphoric acid | 12 | - | - | - | - | - | - | - | - | - | - | - | - | - | 0.16 | - | - | - | - |
| | Dodecyl phosphonic acid | 12 | - | - | - | - | - | - | - | - | - | - | - | - | - | - | 0.16 | - | - | - |
| | FHP | 8 | - | - | - | - | - | - | - | - | - | - | - | - | - | - | - | 0.16 | - | - |
| | ODTMS | 18 | - | - | - | - | - | - | - | - | - | - | - | - | - | - | - | - | 0.16 | - |
| Resin | PARALOID B60 | - | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Organic solvent | BTGH | - | 15 | 15 | 15 | 15 | 15 | 15 | 15 | 15 | 15 | 15 | 15 | 15 | 15 | 15 | 15 | 15 | 15 | 15 |
| | yBL | - | 2 | 2 | 2 | 2 | 2 | 2 | 2 | 2 | 2 | 2 | 2 | 2 | 2 | 2 | 2 | 2 | 2 | 2 |
| | DEDG | - | Remaining amount | Remaining amount | Remaining amount | Remaining amount | Remaining amount | Remaining amount | Remaining amount | Remaining amount | Remaining amount | Remaining amount | Remaining amount | Remaining amount | Remaining amount | Remaining amount | Remaining amount | Remaining amount | Remaining amount | Remaining amount |
| Total | | | 100 | 100 | 100 | 100 | 100 | 100 | 100 | 100 | 100 | 100 | 100 | 100 | 100 | 100 | 100 | 100 | 100 | 100 |
| Ejection characteristics | | | B | C | C | C | B | A | A | A | B | A | C | B | D | D | D | D | D | - |
| Dispersion stability | | | B | B | B | B | A | A | A | A | B | A | B | B | D | D | D | D | E | - |

**Table 2**

| Examples of ink | | R carbon atoms of treatment agent | Examples | | | | | | Comparative Examples | | | Other |
|---|---|---|---|---|---|---|---|---|---|---|---|---|
| | | | B1 | B2 | B3 | B4 | B5 | B10 | B6 | B7 | B8 | B9 |
| Pigment (AL) | T:16nm D:0.4µm | - | 1.6 | 1.6 | 1.6 | 1.6 | 1.6 | 1.6 | 1.6 | 1.6 | 1.6 | - |
| Pigment | P.B.15:3 | - | - | - | - | - | - | - | - | - | - | 1.6 |
| Specific treatment agent | Tridecyl phosphoric acid | 13 | 0.4 | - | | | - | - | - | - | - | - |
| | Cetyl phosphoric acid | 16 | - | 0.4 | - | - | - | - | - | - | - | - |
| | Octadecyl phosphoric acid | 18 | - | - | 0.4 | - | 0.2 | - | - | - | - | - |
| | Octadecyl phosphonic acid | 18 | - | - | - | 0.4 | 0.2 | - | - | - | - | - |
| | 16-phosphnohexadecanoic acid | 13 | - | | - | - | - | 0.4 | - | - | - | - |
| Other treatment agent | Dodecyl phosphoric acid | 12 | - | - | - | - | - | - | 0.4 | - | - | - |
| | FHP | 8 | - | - | - | - | - | - | - | 0.4 | - | - |
| | ODTMS | 18 | - | - | - | - | - | - | - | - | 0.4 | - |
| Resin | D1060 | - | 0.1 | 0.1 | 0.1 | 0.1 | 0.1 | 0.1 | 0.1 | 0.1 | 0.1 | 0.1 |
| Solvent component | PG | - | 15 | 15 | 15 | 15 | 15 | 15 | 15 | 15 | 15 | 15 |
| | 1.2HD | - | 2 | 2 | 2 | 2 | 2 | 2 | 2 | 2 | 2 | 2 |
| | Water | - | Remaining amount | Remaining amount | Remaining amount | Remaining amount | Remaining amount | Remaining amount | Remaining amount | Remaining amount | Remaining amount | Remaining amount |
| Total | | | 100 | 100 | 100 | 100 | 100 | 100 | 100 | 100 | 100 | 100 |
| Ejection characteristics | | | C | B | A | A | A | A | D | D | D | - |
| Dispersion stability | | | C | B | B | A | A | A | D | D | E | - |

### Evaluation

A recording apparatus was prepared. A modified machine of SC-S80650 manufactured by Seiko Epson Corporation was used. The nozzle density of the nozzle row of the ink jet head was 360 npi and 360 nozzles. The ink jet head was filled with ink. The drive waveform of the ink jet head was optimized so that the filled ink was ejected optimally.

During recording, the platen heater was controlled to set the surface temperature of the recording medium on the platen during recording as the heating temperature (°C) in the table as a primary heating step.

In addition, during recording, an after-heater was operated to perform a post-heating step, and the surface temperature of the recording medium in the post-heating step was set to 50°C. For recording, a film made of polyvinyl chloride (Mactac 5829R, manufactured by Mactac) was used as a recording medium.

When recording, the adhesion amount of ink on the recording pattern was 5 mg/inch², and the recording resolution was 1440 × 1440 dpi. The recording test was performed in this manner.

### Ejection Characteristics

Before recording, it was confirmed whether the ink could be ejected stably from the ink jet head. This is a test for confirming ejection stability.

During the test, the platen heater or the like of the recording apparatus was not operated, and the ink was ejected from the ink jet head with a fixed position to an ink receiver. The ink jet head was driven at an ejection frequency of 4 kHz to continuously eject. The ejection was performed in an environment of 30°C and 50% RH.

The ink droplets flying downward from the nozzle were captured with a camera from the side to confirm the flying state of the ink droplets. The ink droplets to be continuously ejected were captured at predetermined time intervals, and the positions of the ink droplets in flying were confirmed. The position was confirmed 20 seconds after the start of continuous ejection at a position 0.8 mm in the ejection direction from the nozzle.

The nozzles were confirmed in which the positions of the ink droplets ejected from a part of nozzles deviated from the positions of the ink droplets ejected from other nozzles in the ejection direction even though the ink droplets were ejected from each nozzle at the same timing. In the captured image, a nozzle having a distance deviation of 30% or more with respect to the distance between the ink droplets ejected before and after was defined as a nozzle having a flight speed deviation. The results are illustrated in Tables 1 and 2.
A: Nozzles with a deviation in flight speed are 2% or less of the total number of nozzles.
B: Nozzles with a deviation in flight speed are more than 2% and 5% or less of the total number of nozzles.
C: Nozzles with a deviation in flight speed are more than 5% and 8% or less of the total number of nozzles.
D: Nozzles with a deviation in flight speed exceed 8% of the total number of nozzles. Dispersion Stability

The ink compositions adjusted in each of the above examples were placed in containers and sealed. The container was left in a constant temperature bath at 45°C for 10 days, and then slowly cooled to room temperature.

Thereafter, these ink compositions were measured using a particle size distribution meter (MT3300EXII manufactured by Microtrac Corp.) to obtain the volume average particle diameter D50 of the metal particles, and the rate of increase of the metal particles contained in the metal pigment composition before being placed in the constant temperature bath from the volume average particle diameter D50 was determined and evaluated according to the following criteria. It can be said that the smaller the increase rate of the volume average particle diameter D50, the better the dispersion stability of the metal particles. The results are illustrated in Tables 1 and 2.
A: Rate of increase is within 2%.
B: Rate of increase is more than 2% and within 4%.
C: Rate of increase is more than 4% and within 7%.
D: Rate of increase is more than 7% and within 10%.
E: Rate of increase is more than 10%.

### Glossiness

A recording test was performed under the above conditions using the recording apparatus. The recording portion of the recorded material obtained in this manner was measured for glossiness at a fanning angle of 60° using a gloss meter, MINOLTA MULTI GLOSS 268, and evaluated according to the following criteria. It can be said that the larger this value is, the better the metallic glossiness is. Since the types of solvents are different between the solvent-based ink and the water-based ink, there is a difference in high and low glossiness as a whole, so that the evaluation criteria are different from each other. The results are illustrated in Tables 3 and 4.

### Evaluation Criteria for Examples in Table 3

A: Glossiness is 350 or more.
B: Glossiness is 300 or more and less than 350.
C: Glossiness is 270 or more and less than 300.
D: Glossiness is 240 or more and less than 270.
E: Glossiness is less than 240.

### Evaluation Criteria for Examples in Table 4

A: Glossiness is 250 or more.
B: Glossiness is 200 or more and less than 250.
C: Glossiness is less than 200.

### Ejection Test

The above recording test was performed continuously for one hour. After recording, a nozzle inspection was performed to confirm the occurrence of nozzle ejection failure, that is, non-ejection or landing position deviation. As for the landing position deviation, the landing position that deviates from the normal position by 30% or more of the distance between the nozzles was regarded as a failure. This is a test for confirming the ejection stability in recording. The results are illustrated in Tables 3 and 4.
A: Ejection failure is 2% or less of the total number of nozzles.
B: Ejection failure is more than 2% and 4% or less of the total number of nozzles.
C: Ejection failure is more than 4% and 7% or less of the total number of nozzles.
D: Ejection failure is more than 7% of the total number of nozzles.

**Table 3**

| Examples of recording test | Examples | | | | | | | | | | | | | | Comparative Examples | | | | |
|---|---|---|---|---|---|---|---|---|---|---|---|---|---|---|---|---|---|---|---|
| | K11 | K12 | K13 | K14 | K15 | K16 | K17 | K18 | K19 | K20 | K21 | K22 | K23 | K24 | K25 | K26 | K27 | K28 | K29 |
| Ink No. | A1 | A2 | A3 | A4 | A5 | A6 | A7 | A8 | A9 | A10 | A11 | A12 | A1 | A1 | A13 | A14 | A15 | A16 | A17 |
| Heating temperature (°C) | 45 | 45 | 45 | 45 | 45 | 45 | 45 | 45 | 45 | 45 | 45 | 45 | 40 | 50 | 45 | 45 | 45 | 45 | 45 |
| Ejection test | B | B | B | B | A | A | A | A | B | A | C | B | A | C | D | D | D | D | D |
| Glossiness | B | B | B | B | A | A | A | A | A | A | C | A | B | B | E | D | D | D | E |

**Table 4**

| Examples of recording test | Examples | | | | | | Comparative Examples | | |
|---|---|---|---|---|---|---|---|---|---|
| | K21 | K22 | K23 | K24 | K25 | K26 | K27 | K28 | K29 |
| Ink No. | B1 | B2 | B3 | B4 | B5 | B10 | B6 | B7 | B8 |
| Heating temperature (°C) | 45 | 45 | 45 | 45 | 45 | 45 | 45 | 45 | 45 |
| Ejection test | C | B | B | B | B | A | D | D | D |
| Glossiness | B | B | A | A | A | A | C | C | C |

### Evaluation of Ink Set

An ink containing a metal pigment (metallic ink) and a colored ink were combined to form an ink set illustrated in Tables 5 and 6. In the above recording test, recording was performed by filling separate nozzle rows with the ink containing the metal pigment and the colored ink. First, the ink containing the metal pigment is adhered with an adhesion amount of 5 mg/inch². Thereafter, the recording medium is rewound and the colored ink was adhered on the ink containing the metal pigment at an adhesion amount of 1 mg/inch² in an overlapping manner. In this manner, recording was performed in the same manner as in the above recording test. In the recorded material obtained in this manner, the recording portion had a metallic glossiness and had a color metallic color colored with the color of the colored ink.

The gloss of the recording portion was measured in the same manner as the glossiness described above. Since the gloss is generally lower than that of the recorded material recorded with the ink containing the above metal pigment alone, the evaluation criteria are as follows. The results are illustrated in Tables 5 and 6.

**Table 5**

| Examples of ink set | Examples | | | | | | | Comparative Examples | | | | |
|---|---|---|---|---|---|---|---|---|---|---|---|---|
| | S11 | S12 | S13 | S14 | S15 | S16 | S17 | S18 | S19 | S20 | S21 | S22 |
| Metallic ink | A1 | A4 | A5 | A6 | A7 | A8 | A9 | A13 | A14 | A15 | A16 | A17 |
| Colored ink | A18 | A18 | A18 | A18 | A18 | A18 | A18 | A18 | A18 | A18 | A18 | A18 |
| Color metallic glossiness | B | B | A | A | A | A | A | C | C | C | C | C |

**Table 6**

| Examples of ink set | Examples | | | | | Comparative Examples | | |
|---|---|---|---|---|---|---|---|---|
| | S21 | S22 | S23 | S24 | S25 | S26 | S27 | S28 |
| Metallic ink | B1 | B2 | B3 | B4 | B10 | B6 | B7 | B8 |
| Colored ink | B9 | B9 | B9 | B9 | B9 | B9 | B9 | B9 |
| Color metallic glossiness | B | B | A | A | A | C | C | C |

### Evaluation Criteria for Examples in Table 5

A: Glossiness is 200 or more.
B: Glossiness is 150 or more and less than 200.
C: Glossiness is less than 150.

### Evaluation Criteria for Examples in Table 6

A: Glossiness is 150 or more.
B: Glossiness is 100 or more and less than 150.
C: Glossiness is less than 100.

As is clear from the table, each of the examples using the ink composition containing the metal pigment of the present disclosure was excellent in ejection stability. Furthermore, the dispersion stability and glossiness were also excellent. In addition, the ink set provided with the ink composition containing the metal pigment of the present disclosure also had excellent color metallic gloss.

On the other hand, in all the comparative examples in which the metal pigment composition of the present disclosure was not used, the ejection stability was inferior. In addition, the ink set not provided with the ink composition containing the metal pigment of the present disclosure was inferior in color metallic gloss.

In addition, the same evaluation as above was performed except that a polyethylene terephthalate film (E1000ZC manufactured by LINTEC Corporation) was used instead of the polyvinyl chloride film (Mactac 5829R manufactured by Mactac) as the recording medium, and the same results as above were obtained.

The following contents are derived from the above-described embodiment.

The ink jet ink composition including the metal pigment, and the liquid medium component, in which the metal pigment is made of the metal particle, the metal particle is surface-modified with the surface treatment agent, the surface treatment agent is at least one selected from the group consisting of the compound represented by formula (1) below and the compound represented by formula (2) below, and the ink jet ink composition is the water-based ink or the solvent-based ink:

(R-O)ₐP(O)(OH)₃₋ₐ ... (1)

(R)P(O)(OH)₂ ··· (2)

where R is a hydrocarbon group having a carbon skeleton having 13 or more carbon atoms independently, and a is 1 or 2.

The ink jet ink composition in which in the surface treatment agent, R in formula (1) and formula (2) is the chain aliphatic hydrocarbon group.

The ink jet ink composition in which in the surface treatment agent, R in formula (1) and formula (2) is the hydrocarbon group having no substituent, and the ink jet ink composition is the solvent-based ink.

The ink jet ink composition in which the ink jet ink composition is the solvent-based ink containing the organic solvent as the liquid medium component or the water-based ink containing water as the liquid medium component.

The ink jet ink composition in which in the surface treatment agent, R in formula (1) and formula (2) is the hydrocarbon group having the substituent, and the ink jet ink composition is the water-based ink.

The ink jet ink composition in which the metal particle is made of aluminum or an aluminum alloy.

The ink jet ink composition in which the metal particle is the scaly particle.

The ink jet ink composition in which the content of the surface treatment agent is 1.0 part by mass or more and 50 parts by mass or less with respect to 100 parts by mass of the metal particle.

The ink jet ink composition in which in the surface treatment agent, R in formula (1) and formula (2) has the carbon skeleton having 15 or more carbon atoms.

The ink set including the above ink jet ink composition, and the ink jet ink composition which is a colored ink containing a coloring material.

The recording method including the adhesion step of ejecting the above ink jet ink composition from the ink jet head and adhering the ink jet ink composition to the recording medium.

The recording method further including the primary heating step of heating the ink jet ink composition adhered in the adhesion step.

The recording method further including the adhesion step of ejecting the ink jet ink composition, which is the colored ink containing the coloring material, from the ink jet head and adhering the ink jet ink composition to the recording medium, in which the colored image having the metallic glossiness is formed.

Examples of the second aspect of the present disclosure will be described.

Hereinafter, the present disclosure will be specifically described with reference to Examples, and the present disclosure is not limited to these Examples. Hereinafter, "part" and "%" are based on mass unless otherwise specified. Unless otherwise specified, the evaluation was performed in an environment of a temperature of 25.0°C and a relative humidity of 40.0%.

### 3. 1. Preparation of Base Ink Composition

Each component was mixed so as to be composition illustrated in Table 7, and a base ink composition used in each example was prepared.

**Table 7**

| Table 7: | | Composition name | 1A | 1B | 1C | 1D | 1E | 1F | 1G |
|---|---|---|---|---|---|---|---|---|---|
| Base ink composition | Pigment suspension | TiO2=50% | - | 30 | - | - | - | - | - |
| | Fixing resin | PARALOID B60 | 5 | 5 | 5 | 5 | 5 | 5 | 5 |
| | Organic solvent | DEDG | 79.9 | 49.9 | 79.9 | 79.9 | 79.9 | 79.9 | 79.9 |
| | | MEDG | 5 | 10 | 5 | 5 | 5 | 5 | 5 |
| | | γBL | 10 | 5 | 10 | 10 | 10 | 10 | 10 |
| | Surfactant | BYK-350 | 0.1 | 0.1 | - | - | - | - | - |
| | | DISPARLON UVX-35 | - | - | 0.1 | - | - | - | - |
| | | BYK-315N | - | - | - | 0.1 | - | - | - |
| | | BYK-325 | - | - | - | - | - | - | 0.1 |
| | | BYK-333 | - | - | - | - | 0.1 | - | - |
| | | MEGAFACE R-40 | - | - | - | - | - | 0.1 | - |
| | Total | | 100 | 100 | 100 | 100 | 100 | 100 | 100 |
| Surface tension (mN/m) | | | 27 | 27 | 27 | 27 | 25 | 22 | 27 |

### 3. 2. Preparation of Metal Pigment Suspension

A resin solubilized in acetone was coated on a PET base material having a thickness of 20 µm using a roll coater. After coating, the resin was transported to an aluminum vacuum vapor deposition machine at a speed of 5 m/s, and an aluminum layer having a thickness of 20 nm was formed on the resin/PET base material under a pressure of 4 × 10⁻³ kPa. The prepared aluminum/resin/PET base material was immersed in an acetone tank and irradiated with ultrasonic waves of 40 kHz to peel off the aluminum pigment from the PET base material. Next, after removing acetone with a centrifuge, an appropriate amount of diethylene glycol diethyl ether (DEDG) was added and pulverized to obtain an aluminum pigment suspension having an aluminum pigment concentration of 5% by mass.

After the pulverization, 6 parts of the phosphorus-based compound illustrated in Table 8 was added to 100 parts of aluminum to the obtained aluminum pigment suspension, and by heat-treating at 55°C for 3 hours under 28 kHz ultrasonic irradiation, the phosphorus-based compound was reacted on the pigment surface to obtain an aluminum pigment dispersion liquid having high leafing ability. The aluminum pigment had a volume average particle diameter D50 of 0.5 µm and a thickness of 19 nm as flat-plate particles.

### 3. 3. Preparation of Metallic Ink Composition

Each component was mixed so as to have composition illustrated in Table 8, and a metallic ink composition used in each example was prepared.

**Table 8**

| Table 8: | | Composition name | 2A | 2B | 2C | 2D | 2E | 2F | 2G | 2H | 2I | 2J |
|---|---|---|---|---|---|---|---|---|---|---|---|---|
| Metallic ink composition | Pigment suspension | AL=5% | 30 | 30 | 30 | 30 | 30 | 30 | 30 | 30 | 30 | 30 |
| | Surface treatment agent | JP512 | 0.075 | - | - | 0.075 | 0.075 | - | - | 0.075 | - | 0.075 |
| | | JP518S | - | 0.075 | - | - | - | - | - | - | 0.075 | |
| | | FHP | - | - | 0.75 | - | - | - | - | - | - | - |
| | Fixing resin | PARALOID B60 | 2 | 2 | 2 | 2 | 2 | 2 | 2 | 2 | 2 | 2 |
| | Organic solvent | DEDG | 62.825 | 62.825 | 62.825 | 62.825 | 62.825 | 62.9 | 62.9 | 62.825 | 62.825 | 62.825 |
| | | BTGH | 5 | 5 | 5 | 5 | 5 | 5 | 5 | 5 | 5 | 5 |
| | Surfactant | BYK-333 | 0.1 | 0.1 | 0.1 | - | - | 0.1 | - | - | - | - |
| | | BYK-3550 | - | - | - | 0.1 | - | - | - | - | - | - |
| | | MEGAFACE R-40 | - | - | - | - | 0.1 | - | 0.1 | - | - | - |
| | | FTERGENT 710FL | - | - | - | - | - | - | - | - | - | 0.1 |
| | | BYK315N | - | - | - | - | - | - | - | 0.1 | - | - |
| | | DISPARLON UVX-35 | - | - | - | - | - | - | - | - | 0.1 | - |
| | Total | | 100 | 100 | 100 | 100 | 100 | 100 | 100 | 100 | 100 | 100 |
| Surface tension (mN/m) | | | 25 | 25 | 25 | 25 | 22 | 25 | 22 | 27 | 27 | 22 |

The abbreviations in Tables 7 and 8 are as follows.
- TiO2 = 50%: Titanium dioxide pigment (white pigment) suspension with a solid content of 50% by mass
- PARALOID B60: Acrylic resin manufactured by Rohm and Haas
- DEDG: Diethylene glycol diethyl ether
- MEDG: Diethylene glycol ethyl methyl ether
- yBL: γ-Butyrolactone
- BYK-350: Silicone-based surfactant manufactured by Big Chemie Co., Ltd.
- DISPARLON UVX-35: Anionic surfactant (acrylic-based) manufactured by Kusumoto Kasei Co., Ltd.
- BYK-315N: Silicone-based surfactant manufactured by Big Chemie Co., Ltd.
- BYK-325: Silicone-based surfactant manufactured by Big Chemie Co., Ltd.
- BYK-333: Silicone-based surfactant manufactured by Big Chemie Co., Ltd.
- MEGAFACE R-40: Fluorine-based surfactant manufactured by DIC Corporation
- AL = 5%: Aluminum pigment suspension with solid content adjusted to 50% by mass
- JP512: Alkyl (C12, C14, C16, C18) acid phosphate manufactured by Johoku Chemical Industry Co., Ltd.
- JP518S: Stearyl phosphoric acid manufactured by Johoku Chemical Industry Co., Ltd.
- FHP: 2- (perfluorohexyl) ethylphosphonic acid manufactured by Unimatec Co., Ltd.
- BTGH: Triethylene glycol monobutyl ether
- BYK-3550: Silicone-based surfactant manufactured by Big Chemie Co., Ltd.

In addition, Tables 7 and 8 illustrate the surface tensions of each composition.

### 3. 4. Evaluation Test

Recording test: Recording tester: SC-S606850 (modified printer manufactured by Seiko Epson Corporation) was used. The nozzle density of the nozzle row was 360 dpi, and 360 nozzles were used.

Adhesion amount of ink: The base ink composition had an adhesion amount of 3.0 mg/inch², and the recording resolution was 1440 × 1440 dpi. The metallic ink composition also had an adhesion amount of 3.0 mg/inch², and was recorded on the metallic ink layer in an overlapping manner.

The surface temperature of the recording medium was set to 45°C by the platen heater during the ink adhesion, and the temperature of the recording medium was set to 50°C in heating by the after-heater.

Recording medium: Vinyl chloride film was used.

In addition, Table 9 illustrates the base ink composition and the metallic ink composition used in each example, and illustrates each surface tension and the difference thereof (difference in surface tension) "base ink composition - metallic ink composition".

### 3. 5. Initial Gloss

Initial gloss: Image quality evaluation of recorded material (60° gloss)

Gloss measurement: Using a gloss meter (MINOLTA MULTI GLOSS 268), the glossiness was measured at a fanning angle of 60°, the measured values were evaluated according to the following criteria, and the results were illustrated in Table 9.
A: Over 450
B: 430 or more and 450 or less
C: 400 or more and 430 or less
D: 350 or more and 400 or less
E: less than 350

### 3. 6. Gloss after Durability Test

Gloss after durability test: A recorded material whose initial gloss was measured was subjected to a durability test.

Durability test conditions: The material was left in a high-temperature and high-humidity tank at 50°C and 80% RH for 1 week, and the subsequent gloss was measured in the same manner as in the above-described gloss measurement. The measured values were evaluated according to the following criteria based on the decrease in gloss from the initial stage, and the results were illustrated in Table 9.
A: Decrease is 10 or less
B: Decrease is more than 10 and 20 or less
C: Decrease is more than 20 and 50 or less
D: Decrease is more than 50 and 70 or less
E: Decrease is more than 70

**Table 9**

| Table 9: | Base ink composition | Metallic ink composition | Surface tension of base ink composition (mN/m) | Surface tension of metallic ink composition (mN/m) | Difference in surface tension (base ink composition - metallic ink composition) | Gloss evaluation | |
|---|---|---|---|---|---|---|---|
| | | | | | | Initial stage | After durability test |
| Example 1 | 1A | 2A | 27 | 25 | 2 | A | A |
| Example 2 | 1B | 2A | 27 | 25 | 2 | A | A |
| Example 3 | 1A | 2B | 27 | 25 | 2 | A | A |
| Example 4 | 1B | 2B | 27 | 25 | 2 | A | A |
| Example 5 | 1A | 2C | 27 | 25 | 2 | B | A |
| Example 6 | 1B | 2C | 27 | 25 | 2 | B | A |
| Example 7 | 1C | 2D | 27 | 25 | 2 | A | A |
| Example 8 | 1D | 2E | 27 | 22 | 5 | A | A |
| Example 9 | 1G | 2J | 27 | 22 | 5 | A | A |
| Comparative Example 1 | 1A | 2F | 27 | 25 | 2 | C | E |
| Comparative Example 2 | 1D | 2G | 27 | 22 | 5 | C | E |
| Comparative Example 3 | 1E | 2A | 25 | 25 | 0 | D | A |
| Comparative Example 4 | 1A | 2H | 27 | 27 | 0 | D | A |
| Comparative Example 5 | 1E | 2B | 25 | 25 | 0 | D | A |
| Comparative Example 6 | 1E | 2C | 25 | 25 | 0 | E | A |
| Comparative Example 7 | 1F | 2I | 22 | 27 | -5 | E | A |
| Comparative Example 8 | 1F | 2F | 22 | 25 | -3 | E | C |

### 3. 7. Evaluation Results

As is clear from Tables 7 to 9, the surface tension of the metallic ink composition is lower than the surface tension of the base ink composition, and in the recording using the ink set of each example in which the metal pigment is the metal particle whose surface was treated, an image having a good metallic gloss and a good durability thereof was obtained.

The present disclosure includes a configuration substantially the same as the configuration described in the embodiment, for example, a configuration having the same function, method, and result, or a configuration having the same purpose and effect. In addition, the present disclosure also includes a configuration in which a non-essential part of the configuration described in the embodiment is substituted. In addition, the present disclosure also includes a configuration that exhibits the same effects as the configuration described in the embodiment or a configuration that can achieve the same object. In addition, the present disclosure also includes a configuration in which a known technique is added to the configuration described in the embodiment.

The following contents are derived from the above-described embodiments and modification examples.

Ink set containing a metallic ink composition containing a metal pigment, and a base ink composition, in which a surface tension of the metallic ink composition is lower than a surface tension of the base ink composition, and the metal pigment is a metal particle whose surface is treated.

According to the ink set, the metallic ink composition is likely to be wet and spread on the base ink composition, and the leafing of the metal pigment contained in the metallic ink composition is likely to occur. Moreover, since the surface of the metal pigment is treated, the metallic gloss is easily maintained well. As a result, it is possible to obtain an image that can maintain good gloss for a long period of time.

In the above ink set, the surface tension of the metallic ink composition may be lower by 0.5 mN/m or more than the surface tension of the base ink composition.

According to the ink set, the metallic ink composition is more likely to be wet and spread on the base ink composition, and the leafing of the metal pigment contained in the metallic ink composition is more likely to occur.

In the above ink set, the base ink composition may be a white ink composition or a clear ink composition.

In the above ink set, the surface of the metal pigment particles may be treated with a phosphorus-based compound or a silicon compound as a surface treatment agent.

According to the ink set, the metallic gloss can be maintained better.

In the above ink set, the particles of the metal pigment may be scaly.

According to the ink set, it is possible to form an image having a higher metallic gloss.

In the above ink set, the average thickness of the particles of the metal pigment may be 5.0 nm or more and 90.0 nm or less.

In the above ink set, the particles of the metal pigment may be made of aluminum or an aluminum alloy.

According to the ink set, it is possible to obtain an excellent image with a metallic feeling.

In the above ink set, the volume average particle diameter D50 of the metal pigment particles may be 0.2 µm or more and 1.0 µm or less.

According to the ink set, it is possible to obtain an excellent image with a metallic feeling.

In the above ink set, the metallic ink composition may be an ink jet ink.

According to the ink set, a high-definition metallic glossy image can be obtained more easily.

In the above ink set, each of the metallic ink composition and the base ink composition may be a solvent-based ink.

The recording method is a recording method using any of the above ink sets, the method includes the step of adhering the base ink composition to the recording medium, and the step of adhering the metallic ink composition to the adhered base ink composition.

According to the recording method, the metallic ink composition is likely to be wet and spread on the base ink composition, and the leafing of the metal pigment contained in the metallic ink composition is likely to occur. Moreover, since the surface of the metal pigment is treated, the metallic gloss is easily maintained well. As a result, it is possible to obtain an image that can maintain good gloss for a long period of time.

## Claims

1. An ink jet ink composition comprising:
a metal pigment; and
a liquid medium component, wherein
the metal pigment is made of a metal particle,
the metal particle is surface-modified with a surface treatment agent,
the surface treatment agent is at least one selected from the group consisting of a compound represented by formula (1) below and a compound represented by formula (2) below, and
the ink jet ink composition is a water-based ink or a solvent-based ink:
(R-O)ₐP(O)(OH)₃₋ₐ ... (1)
(R)P(O)(OH)₂ ··· (2)
wherein R is independently a hydrocarbon group having a carbon skeleton having 13 or more carbon atoms, and a is 1 or 2.

2. The ink jet ink composition according to claim 1, wherein
in the surface treatment agent, R in formula (1) and formula (2) is a chain aliphatic hydrocarbon group.

3. The ink jet ink composition according to claim 1, wherein
in the surface treatment agent, R in formula (1) and formula (2) is a hydrocarbon group having no substituent, and the ink jet ink composition is a solvent-based ink.

4. The ink jet ink composition according to claim 1, wherein
the ink jet ink composition is a solvent-based ink containing an organic solvent as the liquid medium component or is a water-based ink containing water as the liquid medium component.

5. The ink jet ink composition according to claim 1, wherein
in the surface treatment agent, R in formula (1) and formula (2) is a hydrocarbon group having a substituent, and the ink jet ink composition is a water-based ink.

6. The ink jet ink composition according to claim 1, wherein
the metal particle is made of aluminum or an aluminum alloy.

7. The ink jet ink composition according to claim 1, wherein
the metal particle is a scaly particle.

8. The ink jet ink composition according to claim 1, wherein
a content of the surface treatment agent is 1.0 part by mass or more and 50 parts by mass or less with respect to 100 parts by mass of the metal particle.

9. The ink jet ink composition according to claim 1, wherein
in the surface treatment agent, R in formula (1) and formula (2) has a carbon skeleton having 15 or more carbon atoms.

10. An ink set comprising:
the ink jet ink composition according to claim 1; and
an ink jet ink composition which is a colored ink containing a coloring material.

11. A recording method comprising
an adhesion step of ejecting the ink jet ink composition according to claim 1 from an ink jet head and adhering the ink jet ink composition to a recording medium.

12. The recording method according to claim 11, further comprising
a primary heating step of heating the ink jet ink composition adhered in the adhesion step.

13. The recording method according to claim 11, further comprising
an adhesion step of ejecting an ink jet ink composition, which is a colored ink containing a coloring material, from the ink jet head and adhering the ink jet ink composition to the recording medium, wherein
a colored image having a metallic glossiness is formed.
